# EUROPEAN PATENT APPLICATION

(11) **EP 2 869 149 A1**
(43) Date of publication of application: **06.05.2015**
(21) Application number: 14187993.2
(22) Date of filing: 07.10.2014
(51) Int. Cl.: G05B 19/409, D03J 1/00

(54) **Setting control device of a textile device**

(30) Priority: 31.10.2013 JP 2013227683
(71) Applicant: Murata Machinery, Ltd., Kyoto-shi, Kyoto 601-8326 (JP)
(72) Inventor: Nishiyama, Yoshihiro, Kyoto, Kyoto 612-8686 (JP); Noma, Eiji, Kyoto, Kyoto 612-8686 (JP); Honda, Tomoyuki, Kyoto, Kyoto 612-8686 (JP)
(74) Representative: Weickmann & Weickmann

(57) **Abstract**

A setting control device (5) of a textile machine (3) includes a display control section (12) adapted to control display of a display screen of a display section (10). The display control section (12) displays a first setting region (A1) on the display section (10). In the first setting region (A1), an access authority for the display screen is set for every display screen and for every access level of an accessing person accessing the display screen.

## Description

### BACKGROUND OF THE INVENTION

### 1. Field of the Invention

The present invention relates to a setting control device and a method of operating it.

### 2. Description of the Related Art

A setting control device adapted to set an operation and to check an operational state is provided to a textile machine. As an conventional setting control device, there is known a setting control device described in Japanese Patent Application Laid-open No. 2004-332175, for example.

In the setting control device described in Japanese Patent Application Laid-open No. 2004-332175, by specifying an information item of information on weaving and also by selectively specifying a work type in a weaving field, weaving data is prevented from being input by a person not engaged in a corresponding work type.

### SUMMARY OF THE INVENTION

A setting control device of a textile machine may have an access property function in which an access authority for each setting item of a lot, a machine, and the like can be changed for every access level (work type). In this setting control device, the access authority for a prescribed setting item can be changed from a "non-displayed" to a "setting changeable" by the access property function at an access level of an operator, for example. However, in the conventional setting control device, since the access authority for a display screen is fixed by an initial setting, in a case where an access authority for a screen that displays the setting item is not granted to the operator (in a case of a "non-displayed" setting), the screen itself in which the access authority for the setting item has been changed is not displayed to the operator. Therefore, in the conventional setting control device, inconsistency may occur in which even if the access authority for the setting item has been changed, the screen that displays the setting item cannot be browsed and the setting item cannot be accessed.

An object of the present invention is to provide a setting control device and a method of operating it capable of preventing inconsistency of an access authority relating to display from occurring.

A setting control device according to the present invention is a setting control device of a textile machine including a display section capable of displaying a plurality of display screens on a surface thereof. The setting control device includes a display control section adapted to control display of the display screens on the display section. The display control section is adapted to display on the display screen, a first setting region in which an access authority for the display screen is set for every display screen and for every access level of an accessing person accessing the display screen. The display screen is an image (a picture) displayed on the display section. The plurality of display screens are displayed on the display section in a switching manner.

The setting control device displays on the display screen, the first setting region in which the access authority for the display screen is set for every display screen and for every access level of the accessing person accessing the display screen. In such a manner, in the setting control device, the access authority for the display screen can be set in the first setting region. Accordingly, in the setting control device, in a case where the accessing person changes a setting item by an access property function at an arbitrary access level, the access authority for the arbitrary access level can be set such that the display screen can be accessed. The setting control device thus can prevent inconsistency of the access authority relating to display in which even if a setting item has been changed, a display screen that displays the setting item cannot be browsed.

In one embodiment, the display control section may display on the display section, a second setting region in which an access authority for a setting item settable in the textile machine is set for every setting item and for every access level. Accordingly, in the setting control device, the access authority can be set for every setting item in the second setting region.

In one embodiment, the setting control device may include a storage section adapted to store for every access level, each of the access authority for every display screen and the access authority for every setting item, and a setting change section adapted, in a case where a setting of a certain access authority stored in the storage section is changed in the first setting region and/or the second setting region, to change a setting of another access authority stored in the storage section in conjunction with the change. Accordingly, since in a case where a setting of a certain access authority is changed, a setting of another access authority stored in the storage section is changed in conjunction with the change, the setting control device can achieve consistency of the access authority.

In one embodiment, the setting change section may change a setting by linking the access authority for every display screen stored in the storage section and the access authority for every setting item stored in the storage section with each other. Accordingly, the setting control device can achieve consistency of the access authority between the display screen and the setting item displayed on the display screen.

In one embodiment, the setting change section may change a setting of the access authority for every display screen stored in the storage section in conjunction among each access level. Accordingly, the setting control device can achieve consistency of the access authority for the display screen between each access level.

In one embodiment, the setting change section may have a plurality of conjunction patterns of the access authority according to the access level and a setting content of the access authority set in the first setting region and/or the second setting region. Accordingly, the setting control device can perform not only a stereotypical setting of the access authority, but also a setting of the access authority in various conjunction manners.

In one embodiment, the display screen is hierarchized and includes hierarchized screen items. In a case where the access authority for a prescribed screen item of a display screen stored in the storage section is changed, the setting change section may not change a setting of the access authority for a screen item in a hierarchy lower than the prescribed screen item. For example, in a case where the access authority for a screen item in a higher hierarchy is set to the "non-displayed", the access authority for a screen item in a hierarchy lower than the screen item is necessarily the "non-displayed". Therefore, without changing from the higher hierarchy to the lower hierarchy in a conjunction manner, the setting control device can prevent inconsistency in which a screen to be the "non-displayed" is displayed. Furthermore, since the setting in the lower hierarchy is not changed, a later processing of restoring the setting of the access authority for the screen item in the lower hierarchy can be omitted.

In one embodiment, in a case where the access authority for a prescribed display screen stored in the storage section is changed, the setting change section may not change a setting of the access authority for a setting item displayed on the prescribed display screen. The setting item is displayed on the display screen. Therefore, in a case where the access authority for the display screen is set to the "non-displayed", for example, since the display screen is not displayed, the setting item is not displayed, either. Accordingly, without changing the setting of the access authority for the setting item displayed on the display screen, the setting control device can prevent inconsistency in which a setting item not to be displayed is displayed. Furthermore, since the setting of the access authority for the setting item is not changed, a later processing of restoring the setting of the access authority for the setting item can be omitted.

In one embodiment, at least two settings of a "displayed" and a "non-displayed" may be possible in the first setting region as the access authority for every display screen. Accordingly, in the setting control device, since the access authorities are set in advance, the setting of the access authority for every display screen can be easily performed.

In one embodiment, at least three settings of a "setting changeable", a "reading only", and a "non-displayed" may be possible in the second setting region as the access authority for every setting item. Accordingly, in the setting control device, since the access authorities are set in advance, the setting of the access authority for every setting item can be easily performed.

In one embodiment, in a case where the access authority for a prescribed setting item stored in the storage section is changed to the "setting changeable", the setting change section may set the access authority for an access level higher than an access level of the prescribed setting item to the "setting changeable".

In one embodiment, in a case where the access authority for a prescribed setting item stored in the storage section is changed to the "reading only", the setting change section may set the access authority for an access level higher than an access level of the prescribed setting item to an access authority equal to or higher than the "reading only" and set the access authority for an access level lower than the access level of the prescribed setting item to an access authority equal to or lower than the "reading only".

In one embodiment, in a case where the access authority for a prescribed setting item stored in the storage section is changed to the "non-displayed", the setting change section may set the access authority for an access level lower than an access level of the prescribed setting item to the "non-displayed".

In one embodiment, in a case where the access authority for a prescribed setting item stored in the storage section is changed to the "reading only" or the "setting changeable" and where the access authority for a display screen that displays the prescribed setting item is set to the "non-displayed", the setting change section may set the access authority for the display screen to the "displayed".

In one embodiment, in a case where the access authority for a prescribed setting item stored in the storage section is changed to the "non-displayed", the setting change section may set the access authority for a display screen that displays the prescribed setting item to the "non-displayed" except in a specific case.

In one embodiment, the display screen is hierarchized and includes hierarchized screen items. In a case where the access authority for a prescribed screen item of a display screen stored in the storage section is changed from the "non-displayed" to the "displayed", the setting change section may change the access authority for a screen item in a hierarchy higher than the prescribed screen item and the access authority for an access level higher than an access level of the prescribed screen item to the "displayed".

In one embodiment, the display screen is hierarchized and includes hierarchized screen items. In a case where the access authority for a prescribed screen item of a display screen stored in the storage section is changed from the "displayed" to the "non-displayed", the setting change section may change the access authority for a screen item in a hierarchy higher than the prescribed screen item and the access authority for an access level lower than an access level of the prescribed screen item to the "non-displayed".

In one embodiment, the setting control device may include an input/output section adapted to output setting information including the access authority stored in the storage section to an external storage medium or to input the setting information from the external storage medium. In such a manner, in the setting control device, the setting information can be shared with another setting control device via the external storage medium. Accordingly, in a case where a plurality of setting control devices is provided, another setting control device can be set by performing a setting in one setting control device, and thus efficiency can be achieved.

In one embodiment, the display control section may display an access authority setting screen on the display section as one of the plurality of display screens, and may display the first setting region and the second setting region next to each other in the access authority setting screen. Accordingly, the accessing person can perform a setting for the access authority for a display screen and/or a setting item in the access authority setting screen and can easily check the setting content.

In one embodiment, the display control section may display on the display section as the display screen, at least a setting screen in which various settings of the textile machine are performed, and a monitor screen in which a state of the textile machine is monitored. Accordingly, for the setting screen and the monitor screen in particular, inconsistency of the access authority relating to display can be prevented.

Relating to the present invention, there can be provided a textile machine including a plurality of machines each having any one of the above-described setting control devices, each of which can communicate with each other. In the textile machine, inconsistency in which even if the access authority for a setting item has been changed, a display screen that displays the setting item cannot be browsed can be prevented from occurring. Furthermore, in the textile machine, since each of the setting control devices is provided capable of communicating with each other, a setting of another setting control device can be performed by performing a setting of one setting control device, and thus efficiency can be achieved.

Relating to the present invention, there can be provided a textile machine including an overall control device having any one of the control setting devices, and a plurality of machines adapted to be controlled by the overall control device. In the textile machine, inconsistency in which even if the access authority for a setting item has been changed, a display screen that displays the setting item cannot be browsed can be prevented from occurring. Furthermore, in the overall control device, a setting of the access authority can be performed.

Relating to the present invention, there can be provided a yarn winding machine including any one of the control setting devices. In the yarn winding machine, inconsistency in which even if the access authority for a setting item has been changed, a display screen that displays the setting item cannot be browsed can be prevented from occurring.

Relating to the present invention, there can be provided a spinning machine including any one of the control setting devices. In the spinning machine, inconsistency in which even if the access authority for a setting item has been changed, a display screen that displays the setting item cannot be browsed can be prevented from occurring.

According to the present invention, inconsistency of the access authority relating to display can be prevented from occurring.

### BRIEF DESCRIPTION OF THE DRAWINGS

FIG. 1 is a diagram illustrating a textile machine including a setting control device according to one embodiment;
FIG. 2 is a diagram illustrating a configuration of the setting control device;
FIG. 3 is a view illustrating an example of an access authority setting screen displayed on a touch panel;
FIG. 4 is a diagram illustrating an example of a configuration of a hierarchical structure of a menu;
FIG. 5 is a view illustrating an example of the access authority setting screen of when a setting button is pressed;
FIG. 6 is a view illustrating an example of the access authority setting screen of when a setting button is pressed;
FIG. 7 is an extract view of a first setting region and a second setting region;
FIG. 8 is a view illustrating an example of a display screen displayed on the touch panel;
FIG. 9 is a table illustrating an example of control by a setting change section;
FIG. 10 is a table illustrating an example of the control by the setting change section;
FIG. 11 is a table illustrating an example of the control by the setting change section;
FIG. 12 is a table illustrating an example of the control by the setting change section;
FIG. 13 is a table illustrating an example of the control by the setting change section;
FIG. 14 is a table illustrating an example of the control by the setting change section;
FIG. 15 is a table illustrating an example of the control by the setting change section;
FIG. 16 is a table illustrating an example of the control by the setting change section;
FIG. 17 is a table illustrating an example of the control by the setting change section;
FIG. 18 is a table illustrating an example of the control by the setting change section;
FIG. 19 is a table illustrating an example of the control by the setting change section;
FIG. 20 is a table illustrating an example of the control by the setting change section;
FIG. 21 is a table illustrating an example of the control by the setting change section;
FIG. 22 is a table illustrating an example of the control by the setting change section;
FIG. 23 is a table illustrating an example of the control by the setting change section;
FIG. 24 is a table illustrating an example of the control by the setting change section;
FIG. 25 is a table illustrating an example of the control by the setting change section;
FIG. 26 is a table illustrating an example of the control by the setting change section;
FIG. 27 is a table illustrating an example of the control by the setting change section;
FIG. 28 is a table illustrating an example of the control by the setting change section;
FIG. 29 is a view illustrating an example of a monitor screen displayed on the touch panel; and
FIG. 30 is a diagram illustrating a textile machine including a setting control device according to another embodiment.

### DETAILED DESCRIPTION OF PREFERRED EMBODIMENTS

A preferred embodiment of the present invention will be hereinafter described in detail with reference to the attached drawings. The same reference numerals are denoted on the same or corresponding elements throughout description of the drawings, and redundant description will be omitted.

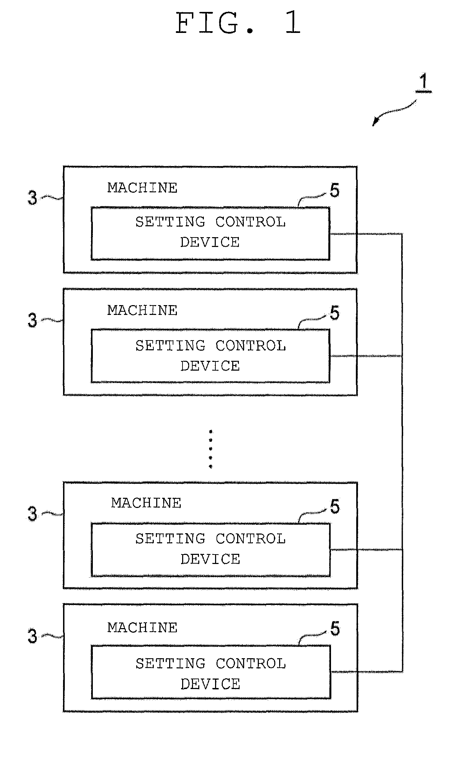

FIG. 1 is a view illustrating a textile machine including a setting control device according to one embodiment. As illustrated in FIG. 1, a system of textile machines 1 includes a plurality of machines 3. Each of the machines 3 has a same configuration. One machine 3 will be hereinafter described as an example.

The machine 3 includes a plurality of units (not illustrated), a machine control device (not illustrated) adapted to integrally control operations of the units, and a setting control device 5. In a case where the system of textile machines 1 consists of spinning machines, the unit (a spinning unit) includes, for example, a draft device, a pneumatic spinning device, a yarn accumulating device, a waxing device, and a winding device, each of which is not illustrated. The machine control device is adapted to control operations of each device provided to the unit based on setting contents set by the setting control device 5. The setting control device 5 may be regarded as a device independent of the machine control device, and may be regarded as a component (device) in the machine control device.

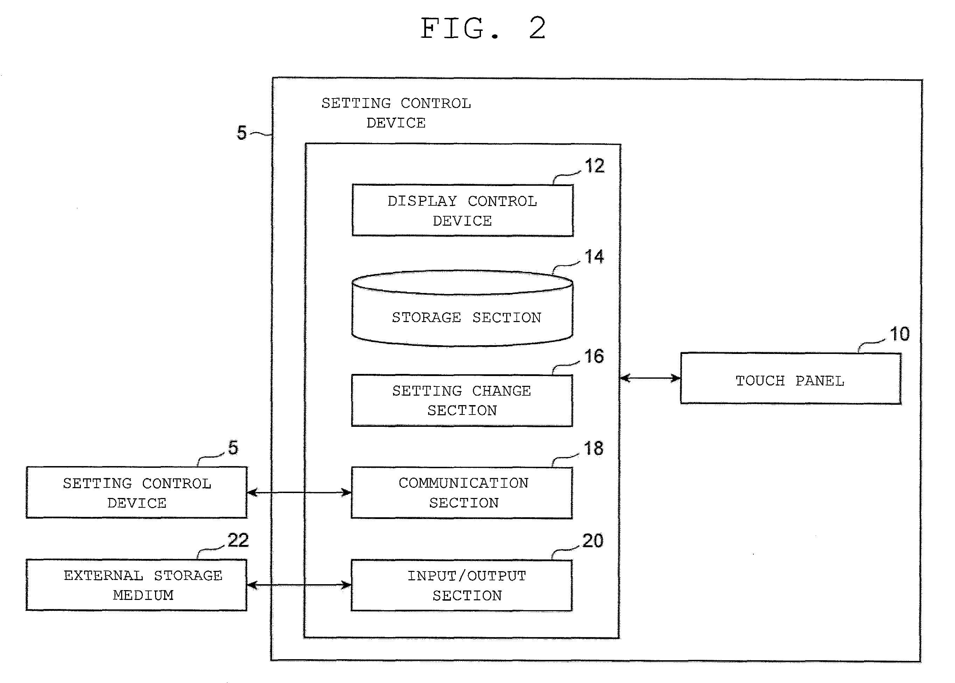

FIG. 2 is a diagram illustrating a configuration of the setting control device 5. The setting control device 5 is adapted to perform an operation such as inputting a setting of an operational condition of the machine 3 and to monitor production status such as machine efficiency, yarn quality control, or the like. Specifically, in the setting control device 5, inputting a setting of various operational conditions of the machine 3, saving, allocating and deleting of a lot setting, and a setting of various maintenance modes can be performed. In addition, in the setting control device 5, data of operational status of the machine 3 and analysis result thereof, and an alarm occurrence status of the machine 3 can be displayed. Furthermore, in the setting control device 5, a setting of an access authority, which is to be described later, can be performed as an access property function.

As illustrated in FIG. 2, the setting control device 5 includes a touch panel (a display section) 10, a display control section 12, a storage section 14, a setting change section 16, a communication section 18, and an input/output section 20. The setting control device 5 includes a Central Processing Unit (CPU), a Random Access Memory (RAM), and a Read Only Memory (ROM).

The touch panel 10 is adapted to display information relating to various settings of the unit, and information relating to an operational state of the unit, and to accept an operation by an accessing person. That is, the touch panel 10 functions as a display section and an operation input section. The touch panel 10 is arranged on a drive box (not illustrated) of the machine 3, for example. The touch panel 10 displays a display screen based on display information output from the display control section 12. When the accessing person performs an operation of touching the display screen, the touch panel 10 outputs the operational information to the display control section 12 or the storage section 14.

The display control section 12 is adapted to control the display screen displayed on the touch panel 10. The display control section 12 generates the display information based on setting information stored in the storage section 14, and outputs the display information to cause the touch panel 10 to display the display screen.

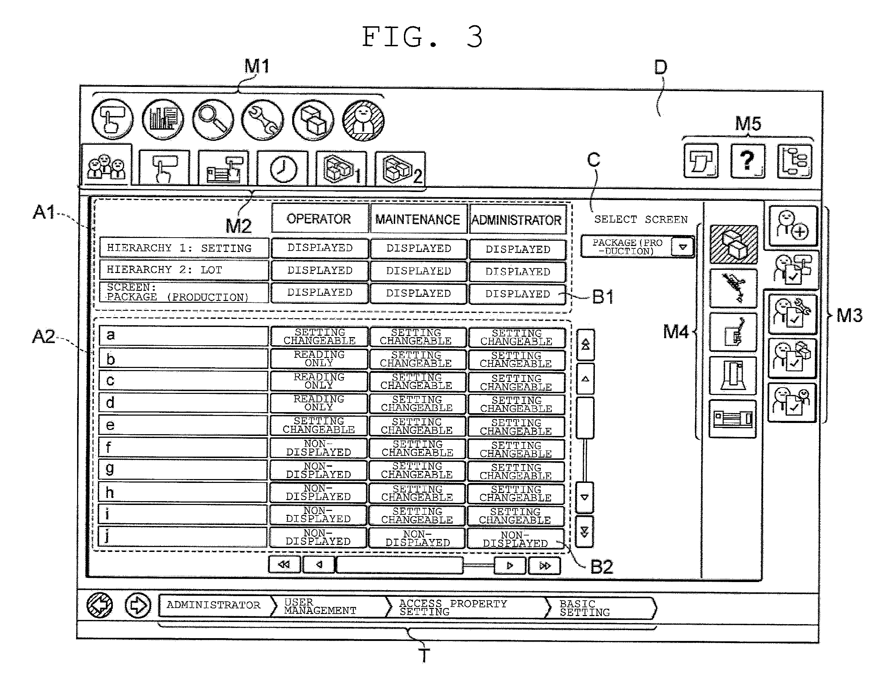

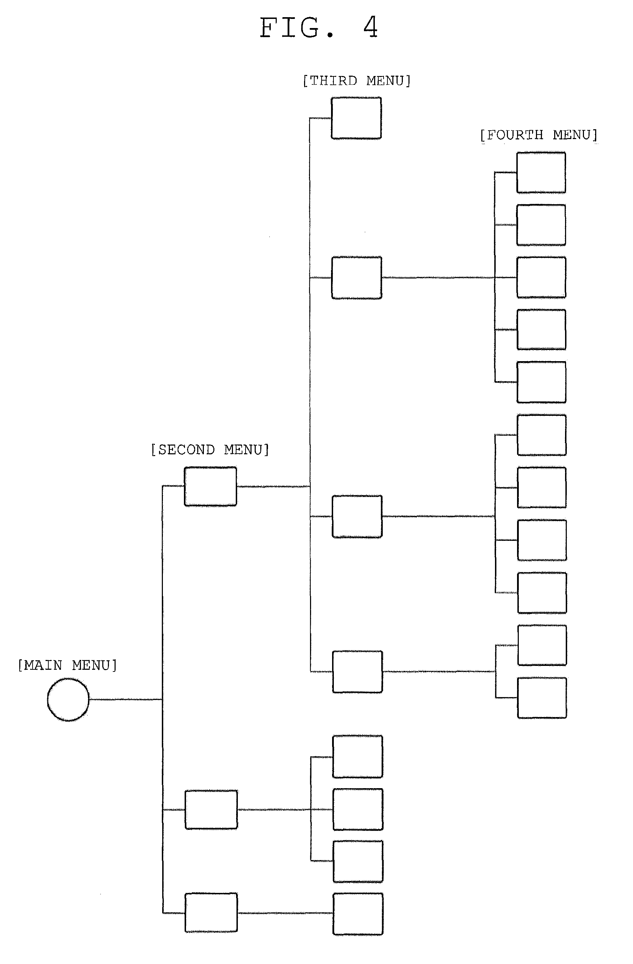

FIG. 3 is a view illustrating an example of an access authority setting screen D displayed on the touch panel 10. The display control section 12 outputs the display information to the touch panel 10, and as illustrated in FIG. 3, causes the touch panel 10 to display the access authority setting screen D, which is one of the display screens. The access authority setting screen D is a screen where the access property function is realized and where the access authority for the display screen to be displayed on the touch panel 10 is set in the setting control device 5. On the access authority setting screen D, for example, a main menu M1, a second menu M2, a third menu M3, a forth menu M4, a sub menu M5, a content C, and a tree path T are displayed. The main menu M1, the second menu M2, the third menu M3, and the fourth menu M4 form a hierarchical structure, and contents of the main menu M1 are minutely classified by the menus M2 to M4. The hierarchical structure of the menus M1 to M4 corresponds to a hierarchical structure of the display screen. The hierarchical structure of the display screen is formed as illustrated in FIG. 4, for example. This hierarchical structure is one example, and has up to a fourth hierarchy in the present embodiment, but the number of the hierarchies is not limited thereto.

The main menu M1 is displayed in an upper left part of a screen. In the main menu M1, for example, categories of a "setting", an "operation monitor", a "quality", a "maintenance", a "lot control", and an "administrator" are displayed with icons.

The "setting" displays a screen on which a new lot is created and set. The "operation monitor" displays a screen on which operation data of the machine 3 and analysis result thereof are displayed. The "quality" displays a screen on which data relating to quality is displayed. The "maintenance" displays a screen on which maintenance such as a setting of various maintenance modes, alarm history, download of a program, and the like is performed. The "lot control" displays a screen on which lot allotment, lot cancellation, and the like are performed. The "administrator" displays a screen on which various basic settings such as time, unit, language switching, shift time, an access property, a specification change of the machine 3 are performed. In FIG. 3, the "administrator" (an icon arranged on a right end of the main menu M1 in FIG. 3) is selected to display the access authority setting screen D.

The second menu M2 is displayed below the main menu M1. The second menu M2 includes categories corresponding to each of the categories (the "administrator", etc.) of the main menu M1, and is set as a hierarchy lower than the main menu M1. The third menu M3 is displayed in a right part of the screen. The third menu M3 includes categories corresponding to each of the categories of the second menu M2, and is set as a hierarchy lower than the second menu M2. The fourth menu M4 is displayed on a left side to the third menu M3. The fourth menu M4 includes categories corresponding to each of the categories of M3, and is set as a hierarchy lower than the third menu M3. A menu in a hierarchy lower than the main menu M1 (for example, the fourth menu M4) is not set in some cases. The accessing person operates (touches) the main menu M1, the second menu M2, the third menu M3, and the fourth menu M4 in this order, for example, and displays a desired display screen on the touch panel 10. The sub menu M5 is displayed in an upper right part of the screen, and is an icon for displaying a screen and a function that are frequently used. The positions where each of the menus M1 to M5 is displayed are not limited thereto.

The content C displays contents that correspond to the selected menus M1 to M5. In FIG. 3, contents of a menu selected in hierarchies of the main menu M1 (the "administrator") → the second menu M2 (a "user management") → the third menu M3 (the "access property setting") → the fourth menu M4 (a "basic setting") are displayed. A hierarchical structure (a path) of the contents displayed in the content C can be checked with the tree path T displayed in a lower part of the screen.

A first setting region A1 and a second setting region A2 are displayed in the content C of the access authority setting screen D. That is, the display control section 12 reads out the setting information stored in the storage section 14 and displays the first setting region A1 and the second setting region A2 in the content C of the touch panel 10 based on the setting information. In the content C, the first setting region A1 and the second setting region A2 are vertically arranged in this order. However, a display mode of the first setting region A1 and the second setting region A2 is not limited thereto. For example, the first setting region A1 may be displayed below the second setting region A2. For example, the first setting region A1 and the second setting region A2 may be displayed side by side. For example, there may be a space between the first setting region A1 and the second setting region A2, or may be not.

The first setting region A1 is a part where the access authority for the display screen is set for every display screen and for every access level of the accessing person who accesses the display screen. Specifically, when an accessing person at an access level of a "MANUFACTURER" sets the access authority for a display screen of a "package (production)", as illustrated in FIG. 3, for example, three screen items of a "hierarchy 1: setting", a "hierarchy 2: lot", and a "screen: package (production)", and three access levels of an "OPERATOR", a "MAINTENANCE", and an "ADMINISTRATOR", which respectively corresponds to the three screen items, are displayed in the first setting region A1.

The screen item includes an item (an actual screen item) of a selected display screen itself and an item (a hierarchical screen item) that corresponds to a higher hierarchy of a hierarchical structure to which the display screen belongs. That is, in the first setting region A1, the access authority for each of the selected display screen and the higher hierarchy of the hierarchical structure to which the display screen belongs can be set for every access level. For example, in a case where the selected display screen is a screen positioned in a third hierarchy, in addition to the selected display screen, the access authority can be set also for a first hierarchy and a second hierarchy of the hierarchical structure to which the selected display screen belongs. In a case where the access authority for a screen item in the hierarchy is changed, the access authorities are changed also for all the other display screens in hierarchies lower than the hierarchy. The access authority for a selected display screen itself will be hereinafter referred to as an access authority for a screen item of a "screen". In addition, the access authority for a higher hierarchy of a hierarchical structure to which the selected display screen belongs will be hereinafter referred to as an access authority for a screen item of a "hierarchy". The access authority for the "hierarchy" is naturally the access authority for the display screen also.

In the present embodiment, the access level includes four levels of the "OPERATOR", the "MAINTENANCE", the "ADMINISTRATOR", and the "MANUFACTURER".

The "OPERATOR", the "MAINTENANCE", and the "ADMINISTRATOR" are levels prepared for a user who uses the textile machine 1. The "MANUFACTURER" is a level prepared for a maker who has produced the textile machine 1. The access levels of the "OPERATOR", the "MAINTENANCE", the "ADMINISTRATOR", and the "MANUFACTURER" become higher in this order. That is, the access level satisfies a relation of the "OPERATOR" < the "MAINTENANCE" < the "ADMINISTRATOR" < the "MANUFACTURER".

In the setting control device 5, when operating the setting control device 5, the accessing person inputs a log-in password of each access level and logs in at each access level. The method for logging-in is not limited to the input of the password, and a key or an ID card may be used. In this case, the access level is judged by identification information embedded in the key or the ID card.

In the setting control device 5, actions that the accessing person can perform are different according to the access level. For example, normally in a case where the accessing person logs in as the "OPERATOR", the setting item and a monitoring item can be browsed. In a case where the accessing person logs in as the "MAINTENANCE", in addition to the browsing as described above, general changes of a setting related to operation and maintenance are possible. In the "ADMINISTRATOR", in addition to the browsing, and the changes of the setting as described above, management of setting such as machine specifications, a password, and the like can be changed. In the "MANUFACTURER", further more actions can be performed.

Since the access authority setting screen D of FIG. 3 illustrates a screen of a case where the accessing person has logged in as the "MANUFACTURER", the access levels are displayed up to the "ADMINISTRATOR". However, in a case of logging in as the "ADMINISTRATOR", the access levels are displayed merely up to the "MAINTENANCE", and in a case of logging in as the "MAINTENANCE", the access level is displayed merely up to the "OPERATOR". In the case of logging in as the "OPERATOR", the access authority setting screen D itself is not displayed. That is, only the access property at an access level lower than the access level of logging in is displayed on the access authority setting screen D, and thus only the access property at the access level lower than the access level of the accessing person can be changed.

In the first setting region A1, a "displayed" and a "non-displayed" can be set for every access level as the access authority for each screen item. The "displayed" is a setting for displaying a certain display screen, and the "non-displayed" is a setting for not displaying a certain display screen. In other words, two different access authorities of the "displayed" and the "non-displayed" are prepared. The "displayed" is stronger than the "non-displayed" in terms of the access authority, which satisfies a relation of the "non-displayed" < the "displayed".

In the first setting region A1, setting buttons (first setting buttons) B1 respectively corresponding to each of the access levels are provided for each screen item. The setting buttons B1 are buttons for setting the "displayed" and the "non-displayed" of the screen items. The display control section 12 displays a current setting status of the access authority in the setting buttons B1 based on the setting information stored in the storage section 14. For example, in the setting buttons B1 illustrated in FIG. 3, the "displayed" is displayed at all the access levels of each screen item.

The second setting region A2 is a part where the access authority for a setting item relating to an operational condition and the like of the textile machine 1 is set for every setting item and for every access level. Specifically, as illustrated in FIG. 3, for example, ten setting items of an "a" to a "j" are displayed in the second setting region A2. In a case where the display screen of the "package (production)" is selected in a spinning machine, for example, the setting items are related to a setting of package production and are a yarn type, a material, a yarn count, a package length, a package weight, and the like, for example.

In the second setting region A2, a "non-displayed", a "reading only", and a "setting changeable" can be set for every access level as the access authority for each setting item. The "non-displayed" is a setting for not displaying the setting item on the display screen. The "reading only" is a setting for displaying the setting item on the display screen, but not accepting a setting change. The "setting changeable" is a setting for allowing a setting of the setting item to be changed on the display screen. In other words, three different access authorities of the "non-displayed", the "reading only", and the "setting changeable" are prepared. The strength of these access authorities is incremental, and satisfies a relation of the "non-displayed" < the "reading only" < the "setting changeable".

In the second setting region A2, setting buttons (second setting buttons) B2 respectively corresponding to each of the access levels displayed in the first setting region A1 are provided for each setting item. The setting buttons B2 are buttons for setting the "non-displayed", the "reading only", and the "setting changeable" of the setting items. The display control section 12 displays a current setting status of the access authority in the setting buttons B2 based on the setting information stored in the storage section 14.

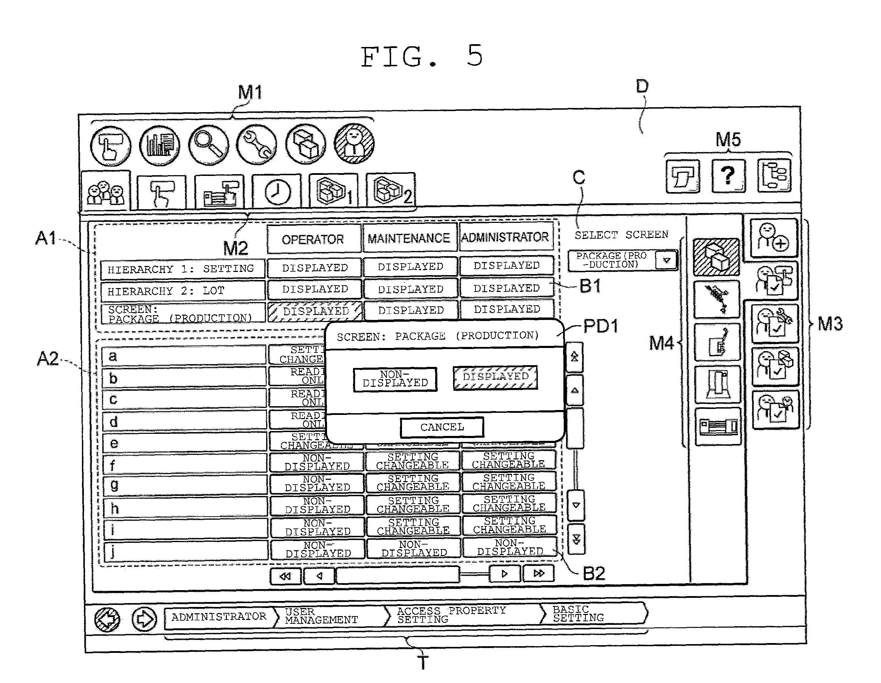

Operations in a case where the access authority is changed in the first setting region A1 will be described. FIG. 5 is a view illustrating an example of a setting screen of when the setting button B1 is pressed. First, the accessing person presses the setting button B1 that corresponds to a prescribed access level and a prescribed screen item (for example, the "screen: package (production)" of the "OPERATOR") of which access authority is to be changed.

When the setting button B1 is pressed by the accessing person, the touch panel 10 outputs the operational information to the display control section 12. In response to this, as illustrated in FIG. 5, the display control section 12 displays a pop-up screen PD1 on the touch panel 10. Options of the "displayed" and the "non-displayed" for the access authority are displayed on the pop-up screen PD1. When the touch panel 10 outputs operational information indicating that either one has been selected from the options of the "displayed" and the "non-displayed" on the pop-up screen PD1, the display control section 12 changes display of the setting button B1 according to the selected option. The touch panel 10 also outputs the operational information to the storage section 14, and the storage section 14 stores the received operational information as the setting information. The setting information includes information indicating a screen item, information indicating an access level of the screen item, and information indicating the access authority for the screen item.

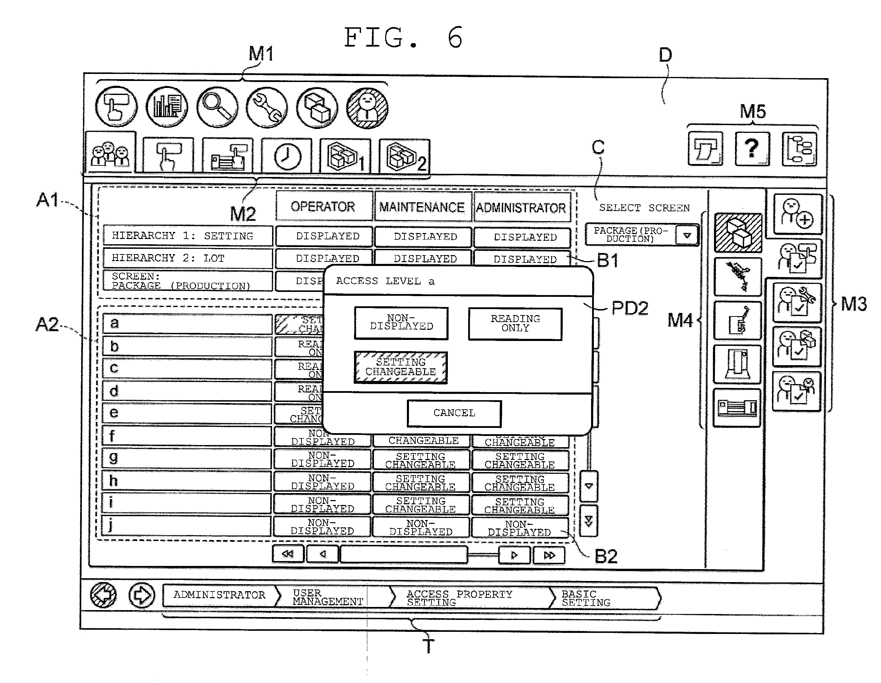

Next, operations in a case where the access authority is changed in the second setting region A2 will be described. FIG. 6 is a view illustrating an example of the setting screen of when the setting button B2 is pressed. First, the accessing person presses the setting button B2 that corresponds to a prescribed access level and a prescribed setting item (for example, the setting item "a" of the "OPERATOR") of which access authority is to be changed.

When the setting button B2 is pressed in the second setting region A2, the touch panel 10 outputs the operational information to the display control section 12. In response to this, as illustrated in FIG. 6, the display control section 12 displays a pop-up screen PD2 on the touch panel 10. Options of the "non-displayed", the "reading only", and the "setting changeable" for the access authority are displayed on the pop-up screen PD2. When the touch panel 10 outputs operational information indicating that one has been selected from the options of the "non-displayed", the "reading only", and the "setting changeable" on the pop-up screen PD2, the display control section 12 changes display of the setting button B2 in the second setting region A2 according to the selected option. The touch panel 10 also outputs the operational information to the storage section 14, and the storage section 14 stores the received operational information as the setting information. The setting information includes information indicating a setting item, information indicating an access level of the setting item, and information indicating the access authority for the setting item.

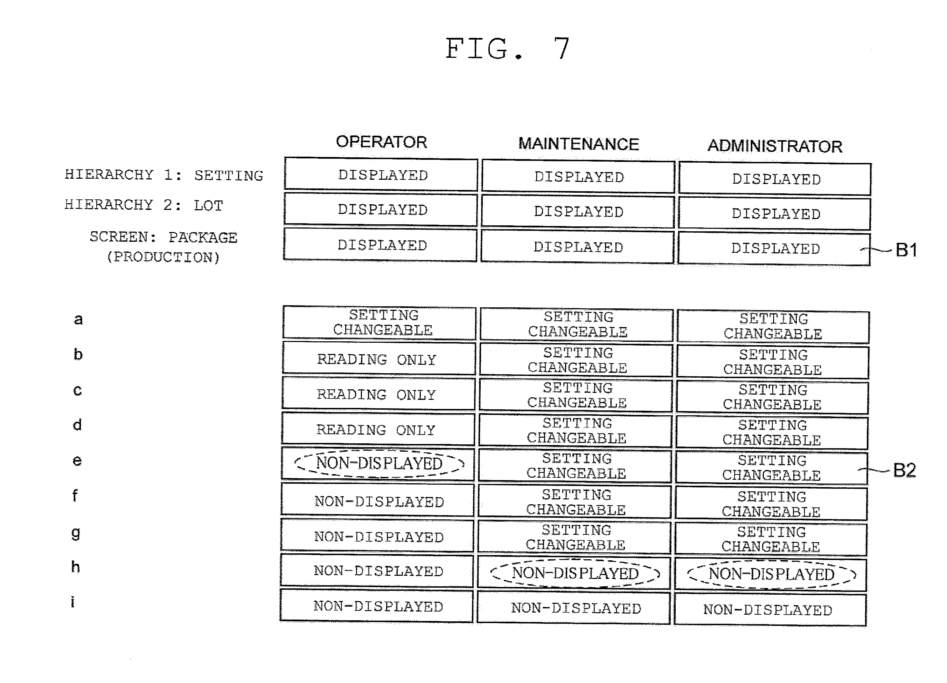

When a setting is changed in the first setting region A1 and the second setting region A2 as described above, the display control section 12 changes a color of display of the setting buttons B1 and B2 of which setting has been changed. FIG. 7 is an extracted view of the first setting region A1 and the second setting region A2. As illustrated in FIG. 7, for example, in a case where an initial setting of the setting item "e" in the second setting region A2 is the "setting changeable", when the setting is changed to the "non-displayed", the display control section 12 displays display of the "non-displayed" in a color (blue, for example) that can be distinguished from a color (black, for example) of another display. A similar operation is performed for the setting item "h". Accordingly, in the setting control device 5, when viewing the access authority setting screen D, the accessing person can recognize at first sight, an item that has been changed this time.

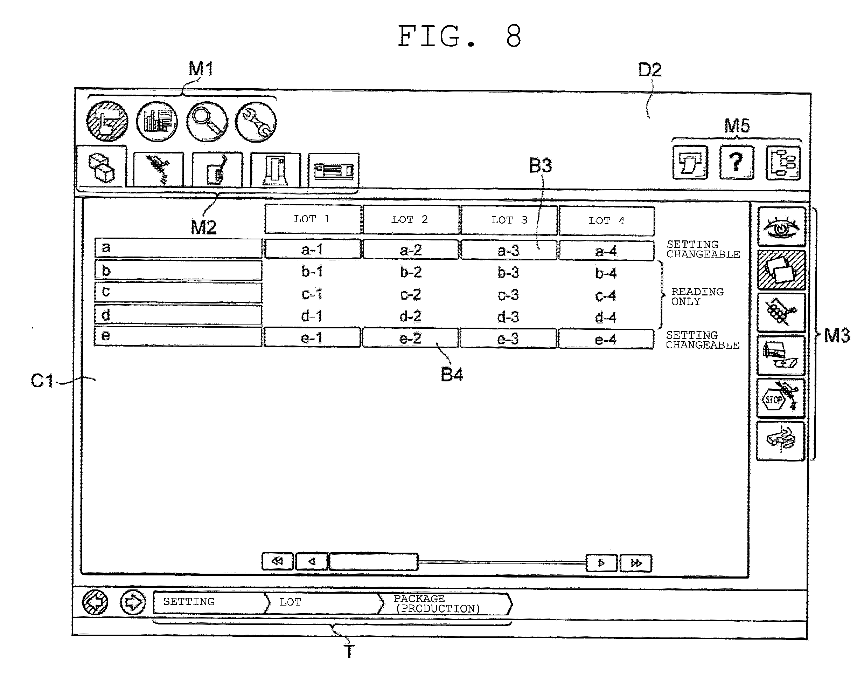

When the access authority is set in the first setting region A1 and/or the second setting region A2, the display control section 12 controls display of the display screen based on set contents. FIG. 8 is a view illustrating an example of the display screen. FIG. 8 illustrates a display screen D2 based on a setting on the access authority setting screen D illustrated in FIG. 3 in a case where the "OPERATOR" has accessed.

When the accessing person presses the menu buttons of the main menu M1 (the "setting"), the second menu M2 (the "lot"), and the third menu M3 (the "package (production)") in this order, the display control section 12 reads out the setting information corresponding to the display screen of this hierarchical structure from the storage section 14. The display control section 12 displays the display screen D2 on the touch panel 10 based on the setting information that has been read out. In a content C1 of the display screen D2, the setting items the "a" to the "e" illustrated in FIG. 3, and items a "lot 1" to a "lot 4" for each setting item are displayed. Setting contents of a plurality of setting items are collectively referred to as a lot. A plurality of lot settings can be saved in the textile machine 1.

Since the setting items "a" and "e" are set to the "setting changeable" in the second setting region A2 illustrated in FIG. 3, setting buttons B3, B4 are displayed in the content C1 of the display screen D2. When the setting button B4 of the setting item "e" in the "lot 1" is pressed, for example, the touch panel 10 outputs operational information to the display control section 12. In response to this, the display control section 12 displays a pop-up screen (not illustrated) on which a numerical value is to be input, for example. When operational information including the numerical value input on the pop-up screen is output from the touch panel 10, the display control section 12 changes display (an "e-1") of the setting button B4. Furthermore, the touch panel 10 outputs the operational information to the storage section 14, and the storage section 14 stores the received operational information as the setting information. In a case where the setting button B3 is pressed, a similar control is performed.

Since the "b" to the "d" in the content C1 are set to the "reading only" in the access authority setting screen D of FIG. 3, numerical values (a "b-2" and the like) are displayed, for example. The "f" to the "j" set to the "non-displayed" on the access authority setting screen D of FIG. 3 are not displayed in the content C1 of FIG. 8.

Referring back to FIG. 2, the storage section 14 is adapted to store for each access level, the access authority for every display screen set in the first setting region A1 and the access authority for every setting item set in the second setting region A2. When receiving operational information output from the touch panel 10, the storage section 14 writes the operational information as the setting information over the existing setting information and stores the updated information. The storage section 14 sequentially stores operational data of the machine 3.

The setting change section 16 is adapted to change the setting information stored in the storage section 14. In a case where a setting of a certain access authority stored in the storage section 14 is changed with an operation in the first setting region A1 and the second setting region A2 by the accessing person, the setting change section 16 changes a setting of another access authority stored in the storage section 14 in conjunction with the change. The setting change section 16 has a plurality of prescribed conjunction patterns (rules) in accordance with the access level and the setting content, and changes the setting of the access authority according to the conjunction patterns. Control of the setting change section 16 will be hereinafter described in detail.

### <Conjunction of the setting change section 16 in the first setting region A1>

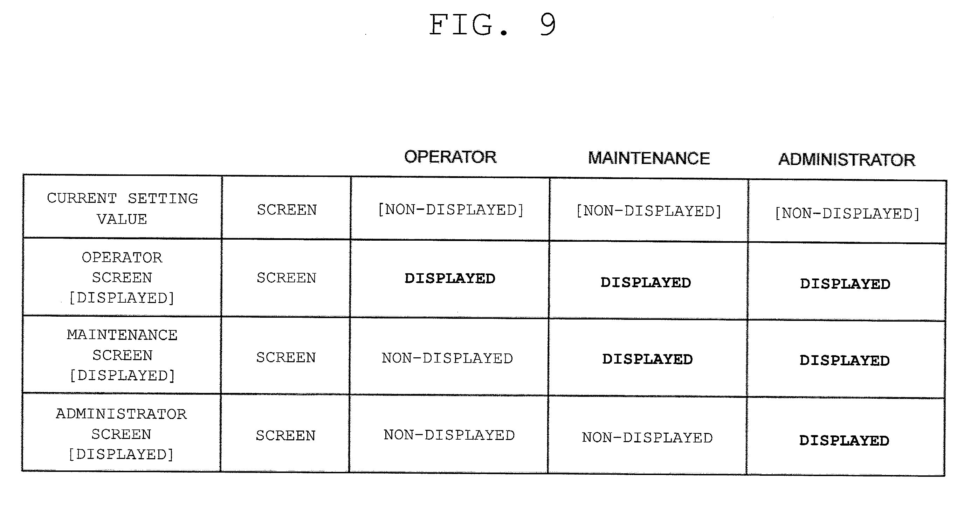

As described above, the two access authorities of the "displayed" and the "non-displayed" can be set in the first setting region A1. The setting change section 16 links the access authority for every screen item of each display screen that is set in the first setting region A1 among the access levels (a higher access level and a lower access level) and/or among screen hierarchies (a higher hierarchy and a lower hierarchy). Specific control of the setting change section 16 in the first setting region A1 will be described with reference to FIGS. 9 to 16. FIGS. 9 to 16 are views each illustrating an example of control of the setting change section 16.

### [Conjunction pattern 1 Screen item: Conjunction of a "displayed" setting with a higher access level]

As indicated by boldface in FIG. 9, in a case where a setting is changed from the "non-displayed" to the "displayed" in a screen item of a prescribed access level, the setting change section 16 sets the "displayed" for a screen item of an access level higher than the prescribed access level. Specifically, the setting change section 16 changes information of the access authority included in the setting information of the storage section 14 from the "non-displayed" to the "displayed". At this time, the display control section 12 changes display of the setting button B1 to the "displayed" based on the changed setting information in the storage section 14. In the following description, description related to control of the setting change section 16 over the storage section 14 and control of the display control section 12 will be omitted.

That is, as illustrated in an uppermost row of FIG. 9, for example, in a case where current settings of the screen items of the "screen" are the "non-displayed" and where a setting of the "OPERATOR", for example, is changed to the "displayed" by the accessing person as illustrated in a second row of FIG. 9, the setting change section 16 also changes the "MAINTENANCE" and the "ADMINISTRATOR", which are access levels higher than the "OPERATOR", to the "displayed". In a case where a setting is changed to the "displayed" at a prescribed access level, the setting change section 16 does not change the access authority for an access level lower than the prescribed access level.

### [Conjunction pattern 2 Screen item: Conjunction of a "non-displayed" setting with a lower access level]

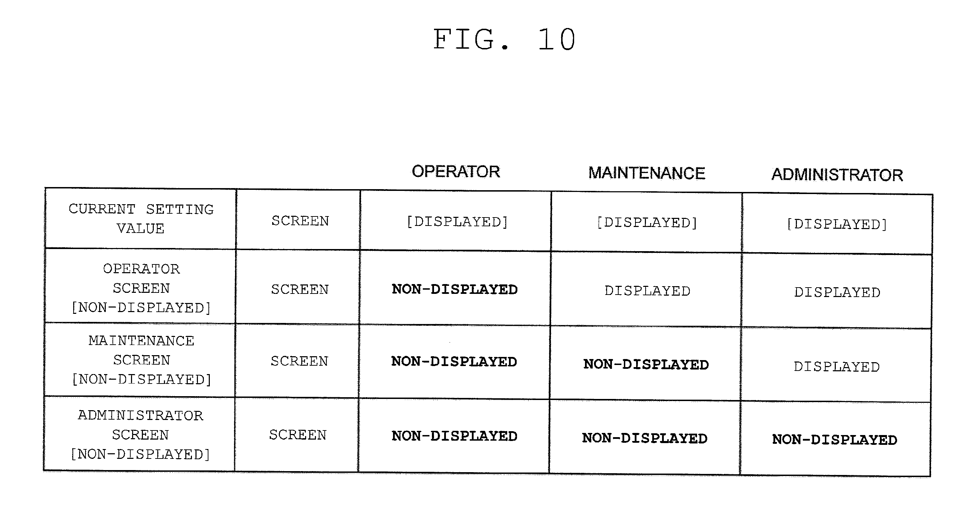

As indicated by boldface in FIG. 10, in a case where a setting is changed from the "displayed" to the "non-displayed" in a screen item of a prescribed access level, a screen item of an access level lower than the prescribed access level is also set to the "non-displayed".

That is, for example, in a case where the current settings of the screen items of the "screen" are the "displayed" as illustrated in an uppermost row of FIG. 10 and where a setting of the "ADMINISTRATOR", for example, is changed to the "non-displayed" by the accessing person as illustrated in a lowermost row of FIG. 10, the setting change section 16 also sets the "OPERATOR" and the "MAINTENANCE", which are access levels lower than the "ADMINISTRATOR", to the "non-displayed". In a case where a setting is changed from the "displayed" to the "non-displayed" at a prescribed access level, the setting change section 16 does not change the access authority for an access level higher than the prescribed access level.

### [Conjunction pattern 3 Screen item: Conjunction of the "displayed" setting with a higher hierarchy]

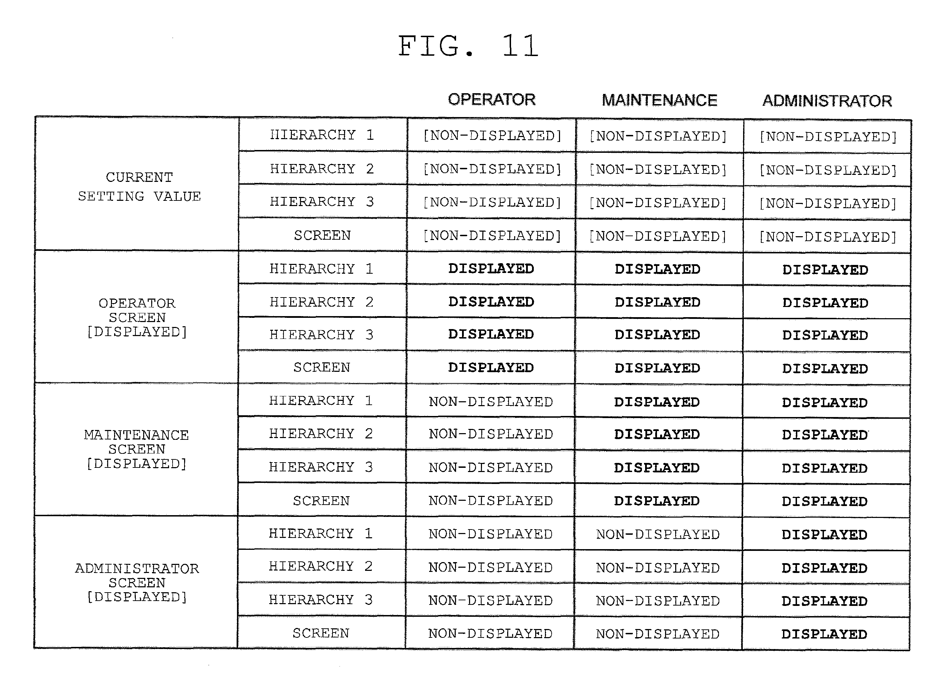

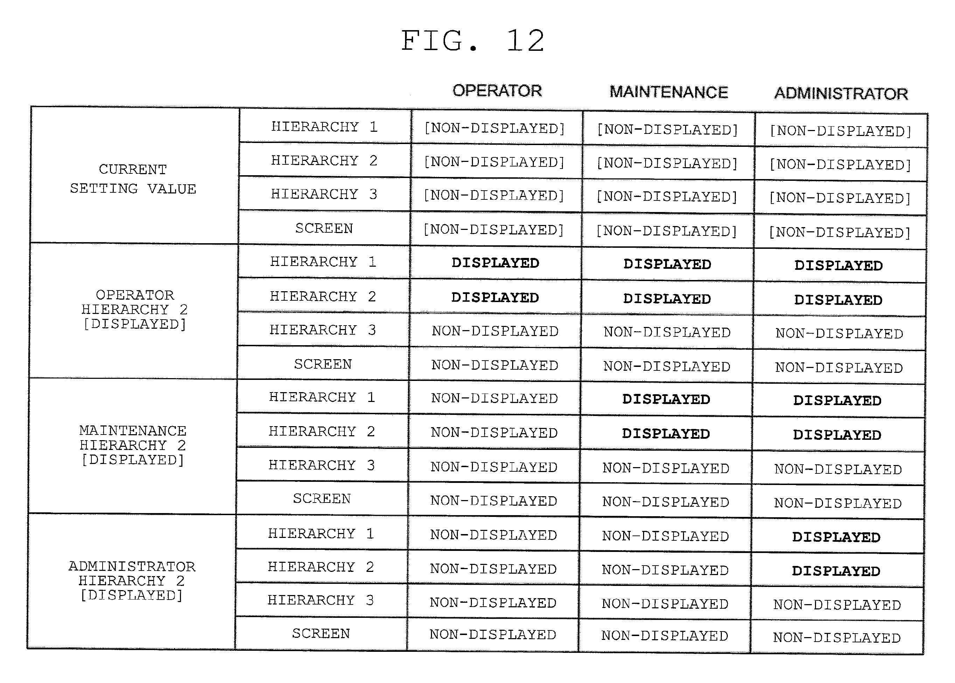

As illustrated in FIGS. 11 and 12, in a case where a screen item at a prescribed hierarchical position is changed from the "non-displayed" to the "displayed", the setting change section 16 also sets the "displayed" for a screen item in a hierarchy higher than the prescribed hierarchy.

That is, as illustrated in FIG. 11, for example, in a case where the current settings of all the screen items of the "screen" and the "hierarchies" are the "non-displayed" and where the screen item of the "screen", for example, is changed to the "displayed" by the accessing person, the setting change section 16 also sets the screen items in hierarchies ("hierarchies 1 to 3") higher than the "screen" to the "displayed". Furthermore, as illustrated in FIG. 12, for example, in a case where the screen item in the "hierarchy 2", for example is set to the "displayed" by the accessing person, the setting change section 16 also sets the screen item in the higher hierarchy (the "hierarchy 1") to the "displayed". In a case where a prescribed screen item is changed from the "non-displayed" to the "displayed", the setting change section 16 does not change the access authority for a screen item in a hierarchy lower than the prescribed screen item. That is, in a case of FIG. 12, for example, the setting change section 16 does not change the access authorities for the screen items in the hierarchies (the "hierarchy 3" and the "screen") lower than the changed screen item.

### [Conjunction pattern 4 Screen item: Conjunction of the "non-displayed" setting with the higher hierarchy]

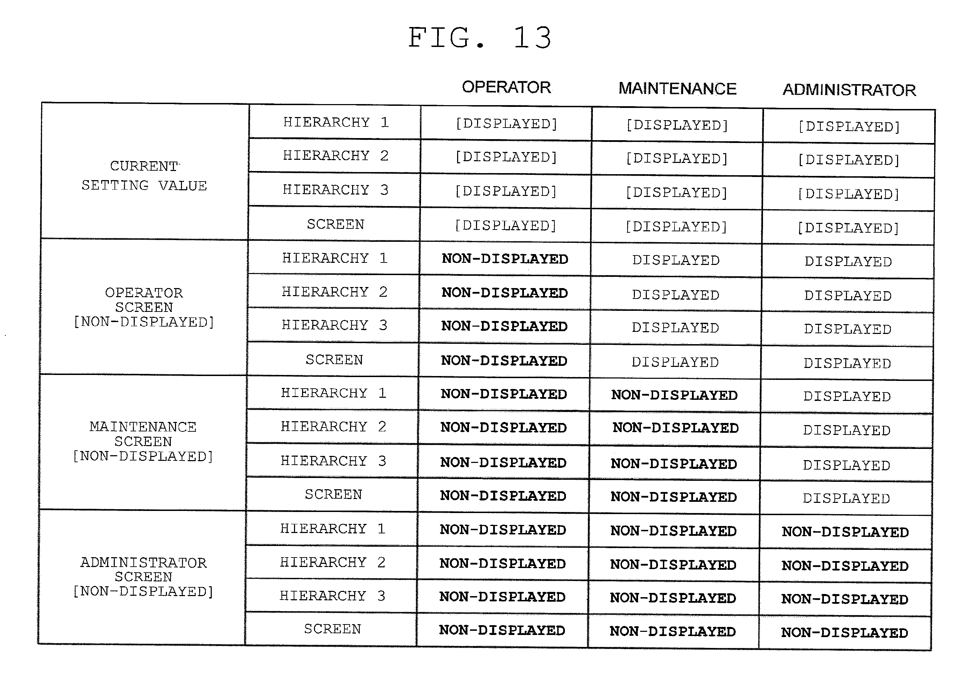

As illustrated in FIGS. 13 to 16, in a case where a screen item at a prescribed hierarchical position is changed from the "displayed" to the "non-displayed", the setting change section 16 also sets the screen item in a hierarchy higher than the prescribed hierarchy to the "non-displayed". However, in a case where there is a screen, which is set to the "displayed", of a screen item at an access level associated with a hierarchy higher than the prescribed hierarchy, the setting is not changed to the "non-displayed" for the hierarchy higher than the prescribed hierarchy.

That is, as illustrated in FIG. 13, for example, in a case where a current settings of all the screen items are the "displayed" and where the setting item of the "screen", for example, is changed to the "non-displayed" by the accessing person, and there is not the screen, which is set to the "displayed", of a screen item at an access level associated with the hierarchies higher than the "screen", the setting change section 16 also sets the "non-displayed" for the screen items in the hierarchies (the "hierarchies 1 to 3") higher than the "screen".

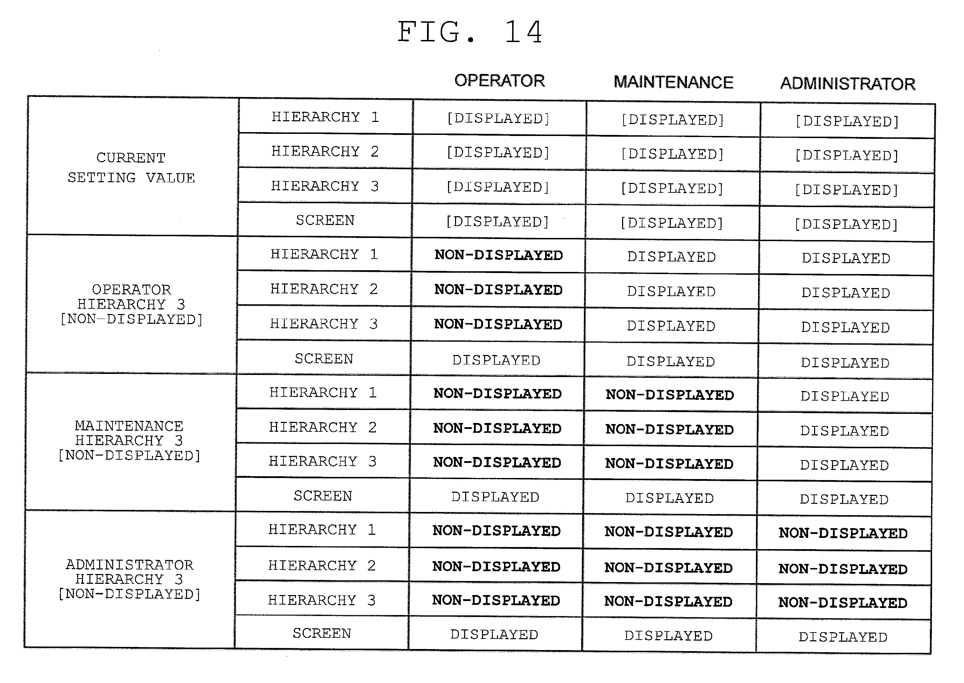

Furthermore, as illustrated in FIG. 14, for example, in a case where the "hierarchy 3", for example, is changed to the "non-displayed" by the accessing person and where there is not the screen, which is set to the "displayed", of a screen at an access level associated with hierarchies, the "hierarchy 1" and the "hierarchy 2" that are higher than the "hierarchy 3", the setting change section 16 sets the screen items (the "hierarchy 1", the "hierarchy 2") in the hierarchies higher than the "hierarchy 3" to the "non-displayed". The access authority for the screen item (the "screen") in a hierarchy lower than the "hierarchy 3" is not changed.

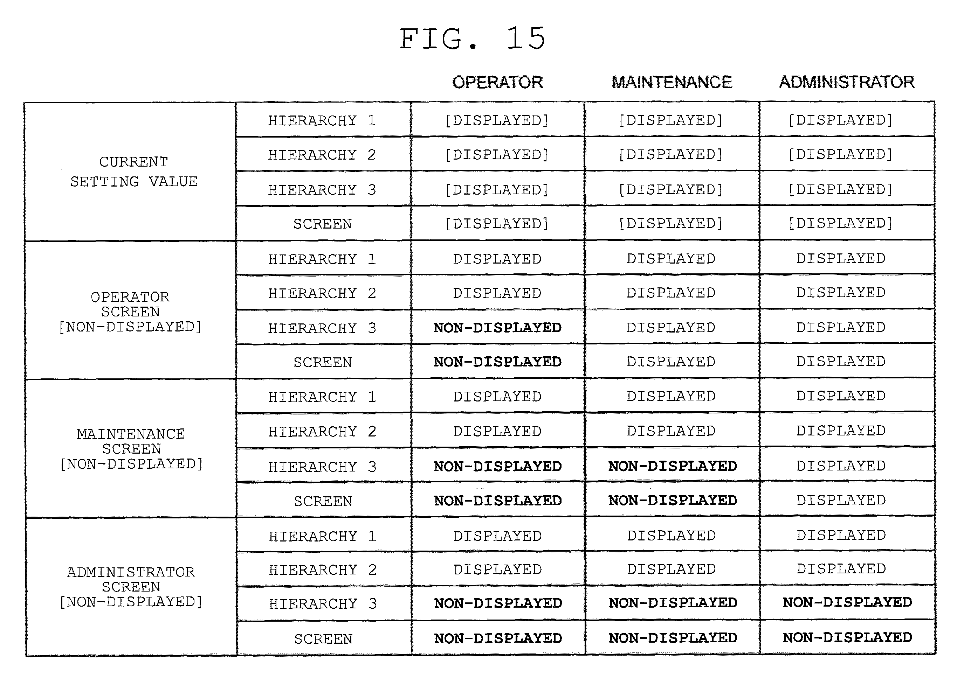

Furthermore, as illustrated in FIG. 15, in a case where the "screen", for example, is changed to the "non-displayed" by the accessing person, the setting change section 16 basically sets the screen items (the "hierarchies 1 to 3") in hierarchies higher than the "screen" to the "non-displayed". However, in a case where there is the screen, which is set to the "displayed" of a screen at an access level associated with the hierarchy 2, for example, the access authorities are not changed for the screen items (the "hierarchy 1", the "hierarchy 2") in hierarchies equal to or higher than the hierarchy 2.

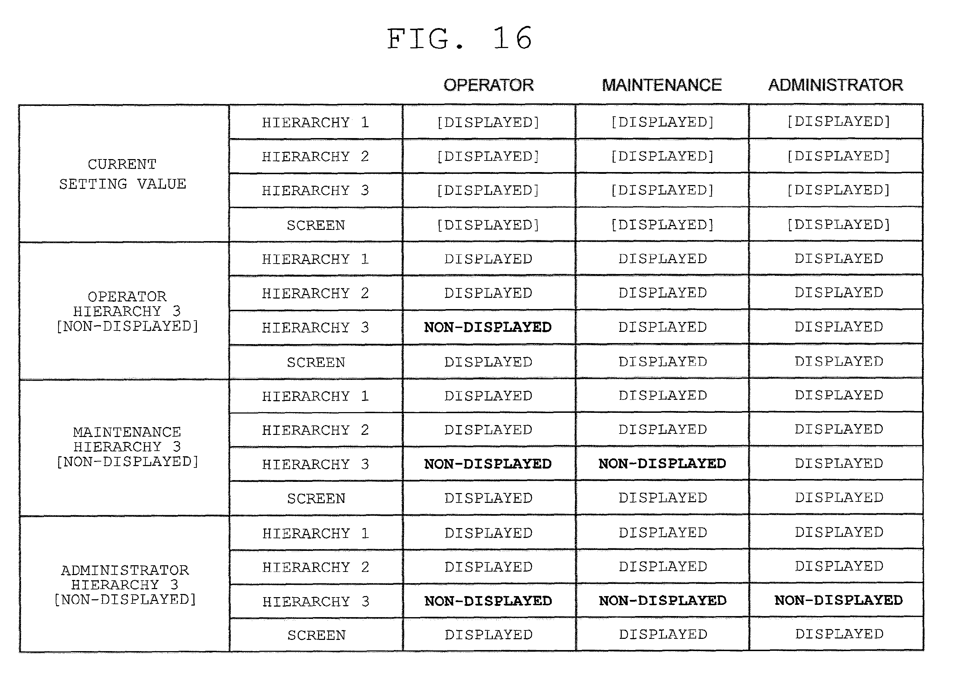

Furthermore, as illustrated in FIG. 16, in a case where the "hierarchy 3", for example, is changed to the "non-displayed" by the accessing person and where the screen, which is set to the "displayed", of the screen at the access level associated with the hierarchy 2, for example, the setting change section 16 does not change the access authorities for the screen items (the "hierarchy 1", the "hierarchy 2") in the hierarchies equal to or higher than the hierarchy 2 and the screen item (the "screen") in a hierarchy lower than the hierarchy 3.

### <Conjunction of the setting change section 16 in the second setting region A2>

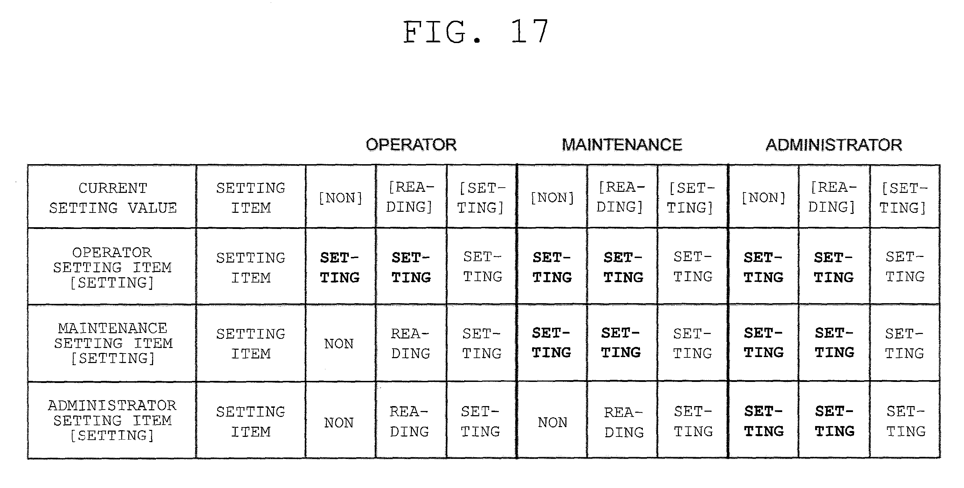

As described above, the three access authorities of the "non-displayed", the "reading only", and the "setting changeable" can be set in the second setting region A2. Specific control of the setting change section 16 in the second setting region A2 will be hereinafter described with reference to FIGS. 17 to 19. FIGS. 17 to 19 are views each illustrating an example of the control of the setting change section 16. In FIGS. 17 to 19, the "non-displayed", the "reading only", and the "setting changeable" are respectively referred to as a "non", a "reading", and a "setting". As described above, the following description is on the premise that the strength of the access authorities satisfies the relation of the "non-displayed" < the "reading only" < the "setting changeable".

### [Conjunction pattern 5 Setting item: Conjunction of a "setting changeable" setting with a higher access level]

As indicated by boldface in FIG. 17, in a case where a setting is changed to the "setting changeable" in a setting item of a prescribed access level, the setting change section 16 also sets the "setting changeable" for a setting item at an access level higher than the prescribed access level. Relating to a conjunction with the higher access level, in a case where the current access authority at the higher access level is authorities (the "reading only", the "non-displayed") weaker than the "setting changeable", the setting change section 16 sets the "setting changeable". In a case where the access authority is set to the "setting changeable", the setting change section 16 maintains the setting without change.

That is, for example, as illustrated in a third row of FIG. 17, in a case where a setting item is changed to the "setting changeable" for the "MAINTENANCE" by the accessing person, the setting change section 16 also sets the setting item of the "ADMINISTRATOR" to the "setting changeable", which is an access level higher than the "MAINTENANCE".

### [Conjunction pattern 6 Setting item: Conjunction of a "reading only" setting with another access level]

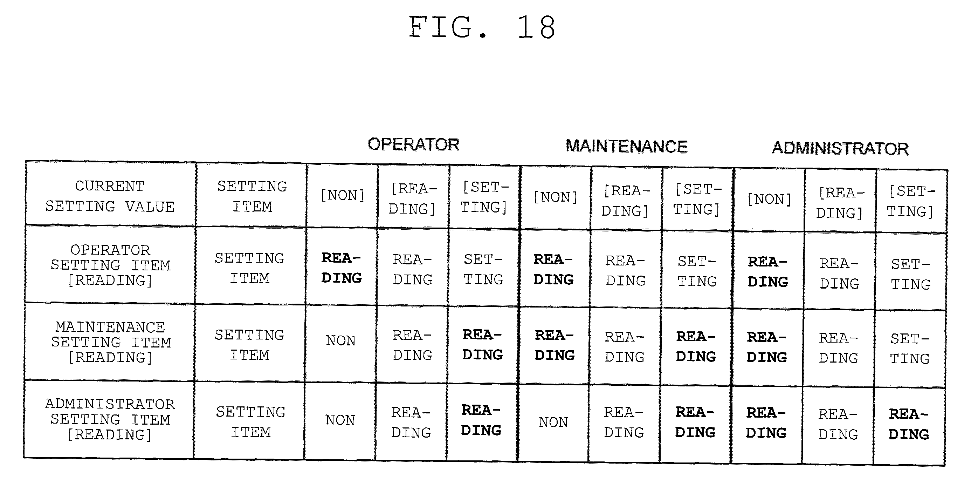

As indicated by boldface in FIG. 18, in a case where a setting is changed to the "reading only" in a setting item at a prescribed access level, the setting change section 16 sets a setting item at an access level higher than the prescribed access level to access authorities (the "reading only", the "setting changeable") equal to or higher than the "reading only", and simultaneously sets a setting item at an access level lower than the prescribed access level to access authorities (the "reading only", the "non-displayed") equal to or lower than the "reading only". At this point, relating to the conjunction with the higher access level, in a case where the current access authority at the higher access level is an authority (the "non-displayed") weaker than the "reading only", the setting change section 16 sets to the "reading only", and in a case where the current access authority at the higher access level is set to an authority equal to or higher than the "reading only", the setting change section 16 maintains the setting without change. Simultaneously, relating to the conjunction with the lower access level, in a case where the current access authority at the lower access level is an access authority (the "setting changeable") stronger than the "reading only", the setting change section 16 sets to the "reading only", and in a case where the current access authority at the lower access level is set to an access authority equal to or lower than the "reading only", the setting change section 16 maintains the setting without change.

### [Conjunction pattern 7 Setting item: Conjunction of a "non-displayed" setting with a lower access level]

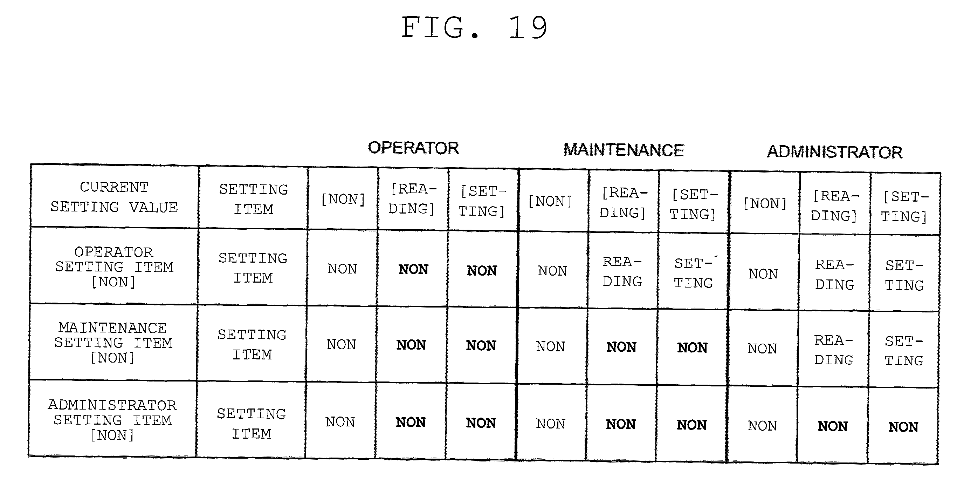

As indicated by boldface in FIG. 19, in a case where a setting is changed to the "non-displayed" for a setting item at a prescribed access level, the setting change section 16 sets the "non-displayed" for a setting item at an access level lower than the prescribed access level.

That is, as illustrated in a third row of FIG. 19, in a case where the setting item of the "MAINTENANCE", for example, is changed to the "non-displayed", by the accessing person, the setting change section 16 also sets the setting item of the "OPERATOR", which is an access level lower than the "MAINTENANCE" to the "non-displayed".

### <Conjunction between the first setting region A1 and the second setting region A2>

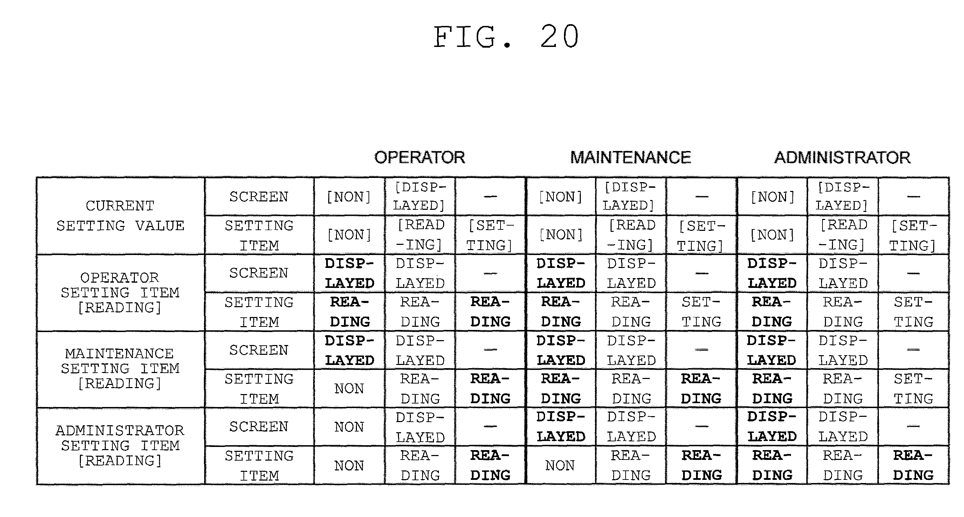

The setting change section 16 links the access authority for every display screen set in the first setting region A1 and the access authority for every setting item set in the second setting region A2 with each other. FIGS. 20 to 27 are views each illustrating an example of the control of the setting change section 16. In FIGS. 20 to 27, the "non-displayed", the "reading only", and the "setting changeable" are respectively referred to as the "non", the "reading" and the "setting".

### [Conjunction pattern 8 Setting item: Conjunction of the "reading only" setting with a screen item]

As indicated by boldface in FIG. 20, in a case where a setting is changed to the "reading only" for a setting item at a prescribed access level, the setting change section 16 sets a screen item of a display screen that displays the relevant setting item to the "displayed".

That is, for example, in a case where a setting item is changed from the "non-displayed" to the "reading only" by the accessing person and where a screen item of a corresponding display screen is the "non-displayed", the relevant screen item is changed to the "displayed". In addition, for example, in a case where a setting item is changed from the "setting changeable" to the "reading only" by the accessing person, a current setting of a screen item of a corresponding display screen is set to the "displayed", and thus the "displayed" setting is maintained (is not changed).

### [Conjunction pattern 9 Setting item: Conjunction of the "setting changeable" setting with a screen item]

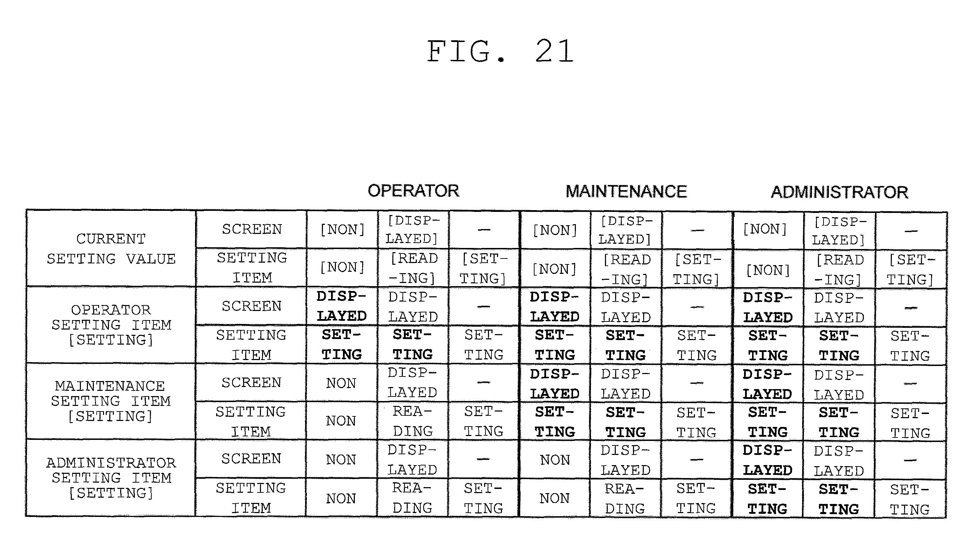

As indicated by boldface in FIG. 21, in a case where a setting is changed to the "setting changeable" for a setting item at a prescribed access level, the setting change section 16 sets a screen item of a display screen that displays the relevant setting item to the "displayed".

That is, for example, in a case where a setting item is changed from the "non-displayed" to the "setting changeable" by the accessing person and where a screen item of a corresponding display screen is the "non-displayed", the relevant screen item is changed to the "displayed". In addition, for example, in a case where a setting item is changed from the "reading only" to the "setting changeable", a current setting of a screen item of a corresponding display screen is set to the "displayed", and thus the "displayed" setting is maintained (is not changed).

### [Conjunction pattern 10 Setting item: Conjunction of the "non-displayed" setting with a screen item]

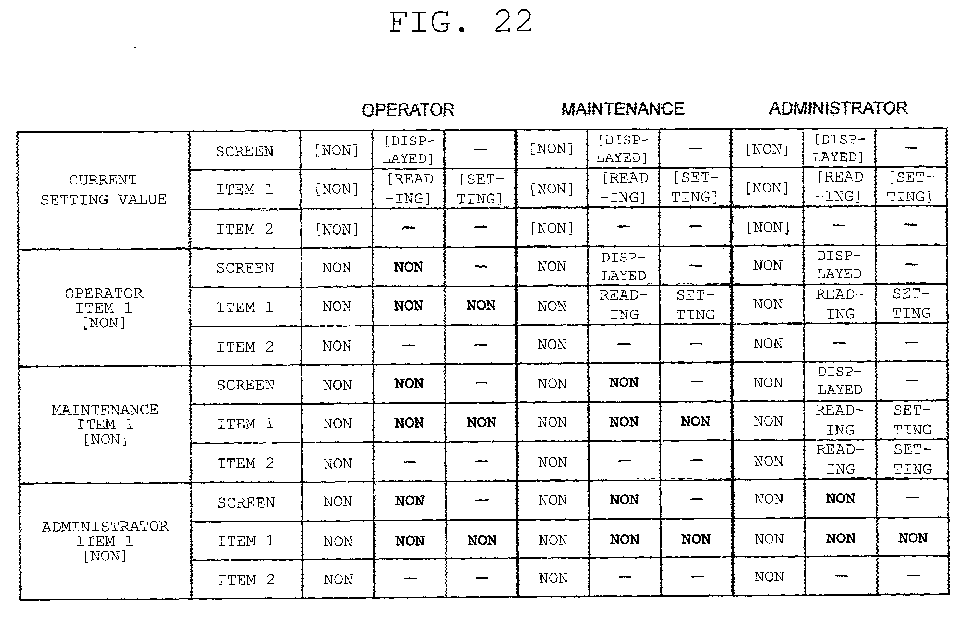

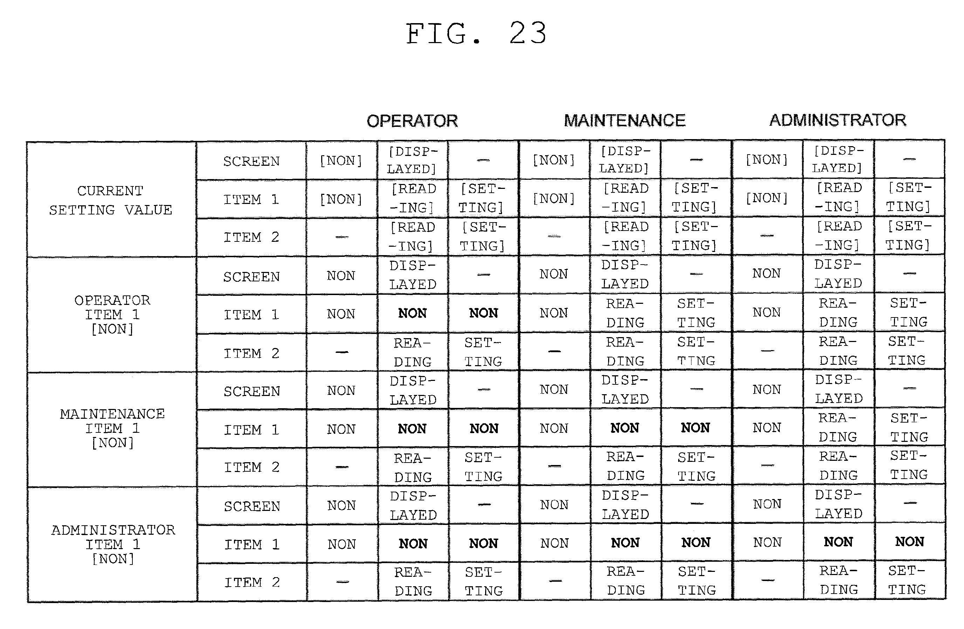

As illustrated in FIGS. 22 and 23, in a case where a setting is changed to the "non-displayed" for a setting item at a prescribed access level, the setting change section 16 sets a screen item of a corresponding display screen to the "non-displayed". However, in a case where there is a setting item, which is set to the "reading only" or the "setting changeable", of other setting items displayed on the corresponding display screen, the screen item is not changed to the "non-displayed". In other words, only in a case where all the setting items to be displayed on the corresponding display screen are set to the "non-displayed", the screen item of the corresponding display screen is set to the "non-displayed".

That is, as indicated by boldface in FIG. 22, in a case where a setting item 1, for example, is changed from the "reading only" or the "setting changeable" to the "non-displayed" by the accessing person and where a current setting of a setting item 2 is also the "non-displayed", the setting change section 16 changes a screen item of a corresponding display screen to the "non-displayed". As a premise for FIGS. 22 and 23, setting items displayed on the corresponding display screen are only the setting items 1 and 2.

As indicated by boldface in FIG. 23, for example, even in a case where a setting item 1 is set from the "reading only" or the "setting changeable" to the "non-displayed" by the accessing person, when a setting item 2 is set to the "reading only" or the "setting changeable", the setting change section 16 does not change the access authority for a screen item of a corresponding display screen. As described above, in a case where any one of the setting items of the corresponding display screen is set to the "reading only" or the "setting changeable", the setting change section 16 does not change the screen item to the "non-displayed".

### [Conjunction pattern 11 Setting item: Conjunction of a "reading only" or "setting changeable" setting with a screen item of a hierarchical structure]

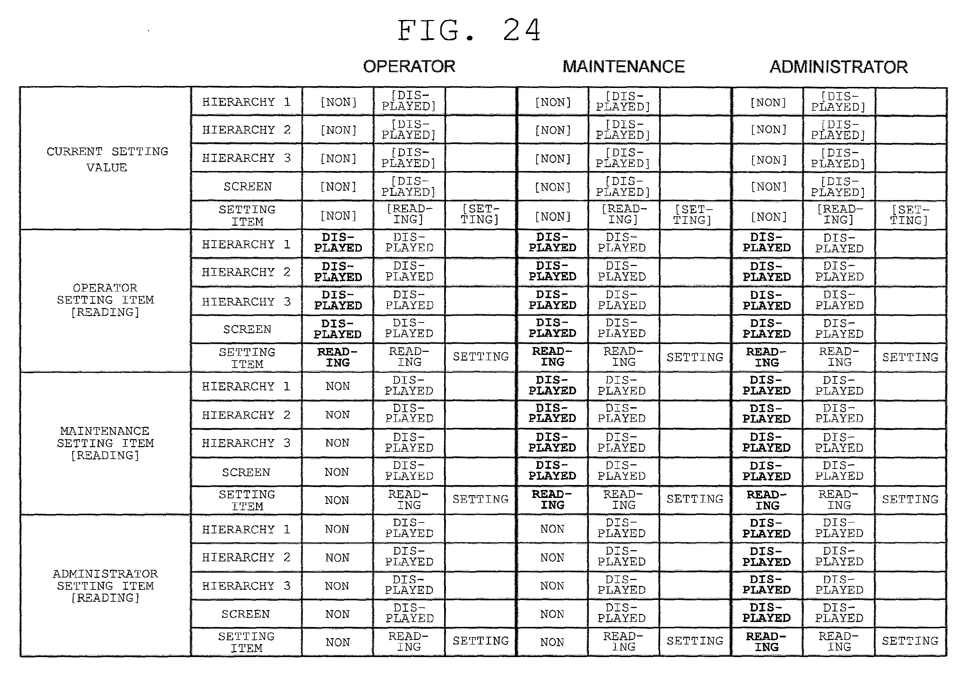

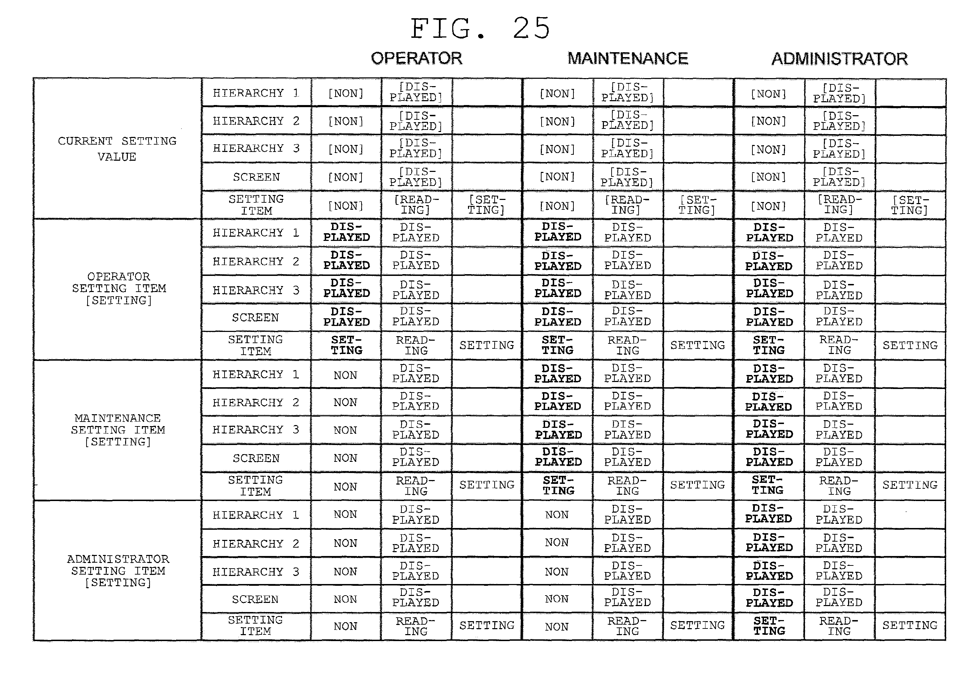

As illustrated in FIGS. 24 and 25, in a case where a setting is changed from the "non-displayed" to the "reading only" or the "setting changeable" for a setting item at a prescribed access level, the setting change section 16 sets all the screen items of a hierarchized corresponding display screen to the "displayed". Regarding current setting values of FIGS. 24 and 25, the setting item is set to the "non-displayed" corresponding to the "non-displayed" of the screen items, the "hierarchy 1", the "hierarchy 2", the "hierarchy 3" and the "screen", and the screen item is set to the "reading only" or the "setting changeable" corresponding to the "displayed" of the screen items, the "hierarchy 1", the "hierarchy 2", the hierarchy 3", and the "screen".

That is, as indicated by boldface in FIG. 24, in a case where the setting item, for example, is changed from the "non-displayed" to the "reading only" by the accessing person, the setting change section 16 sets the screen item of the "screen" to the "displayed" and also sets screen items (the "hierarchies 1 to 3") in hierarchies higher than the "screen" to the "displayed".

As indicated by boldface in FIG. 25, for example, in a case where the setting item is changed from the "non-displayed" to the "setting changeable" by the accessing person, the setting change section 16 sets the screen item of the "screen" to the "displayed" and also sets screen items (the "hierarchies 1 to 3") in hierarchies higher than the "screen" to the "displayed".

### [Conjunction pattern 12 Setting item: Conjunction of the "non-disclosed" setting with the screen item of the hierarchical structure]

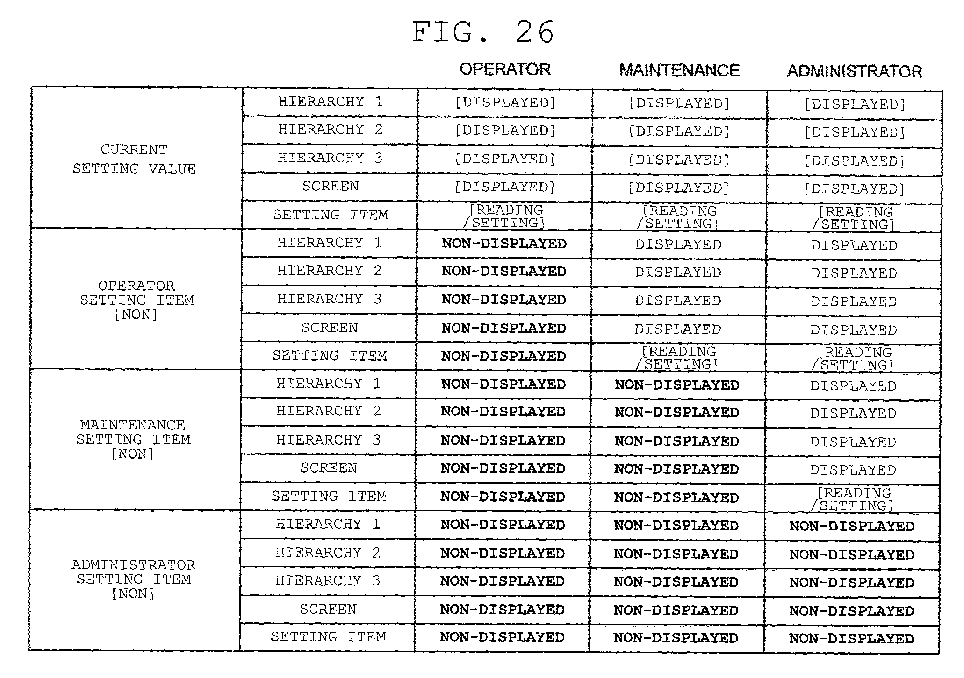

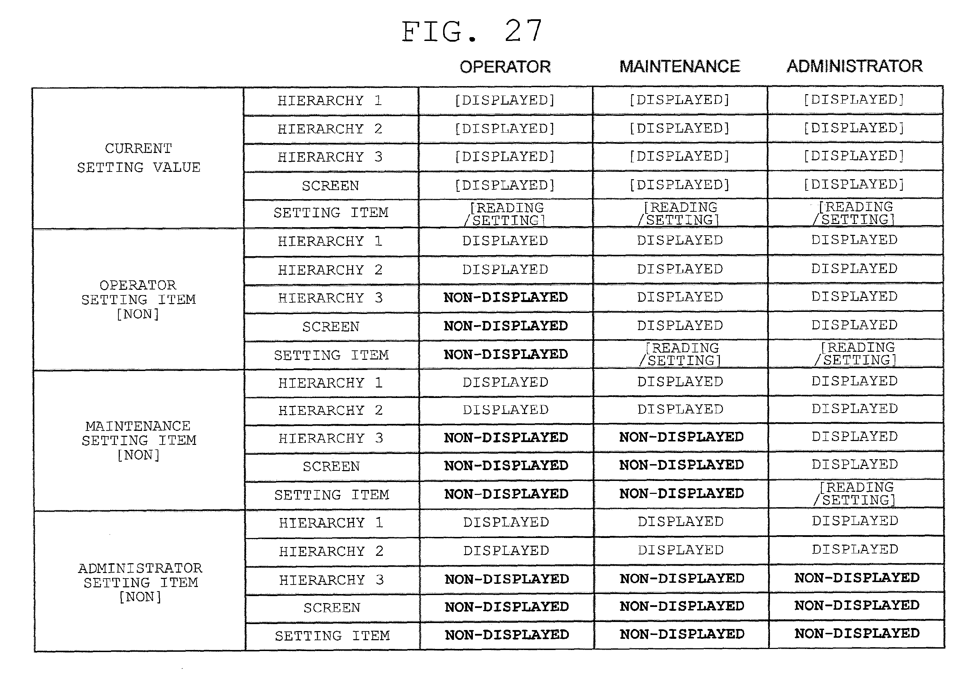

As illustrated in FIGS. 26 and 27, in a case where a setting is changed from the "reading only" or the "setting changeable" to the "non-displayed" for a setting item at a prescribed access level, the setting change section 16 sets all the screen items of a hierarchized corresponding display screen to the "non-displayed". However, in a case where there is a screen, which is set to the "displayed", in a screen at an access level associated with a higher hierarchy, a screen item in a hierarchy equal to or higher than the hierarchy is not changed to the "non-displayed". In this case, regarding current setting values of FIGS. 26 and 27, the setting item is set to the "reading only" or the "setting changeable" corresponding to the "displayed" of the screen items, the "hierarchy 1", the "hierarchy 2", the "hierarchy 3" and the "screen".

That is, as indicated by boldface in FIG. 26, in a case where the setting item is changed from the "reading only" or the "setting changeable" to the "non-displayed" by the accessing person, the setting change section 16 sets the screen items, the "hierarchy 1", the "hierarchy 2", the "hierarchy 3", and the "screen" of a corresponding display screen to the "non-displayed". However, in a case of FIG. 26, there is not the screen, which is set to the "displayed", in a screen and at an access level each associated with a higher hierarchy.

As illustrated in FIG. 27, in a case where the setting item, for example, is changed from the "reading only" or the "setting changeable" to the "non-displayed" by the accessing person and where there is the screen, which is set to the "displayed", in a screen and at an access level each associated with the "hierarchy 2", for example, the setting change section 16 changes the screen items (the "hierarchy 3", the "screen"), which are lower than the "hierarchy 2", to the "non-displayed", and does not change the access authorities for the screen items (the "hierarchy 1", the "hierarchy 2"), which are equal to or higher than the "hierarchy 2".

### [Prohibition of conjunction]

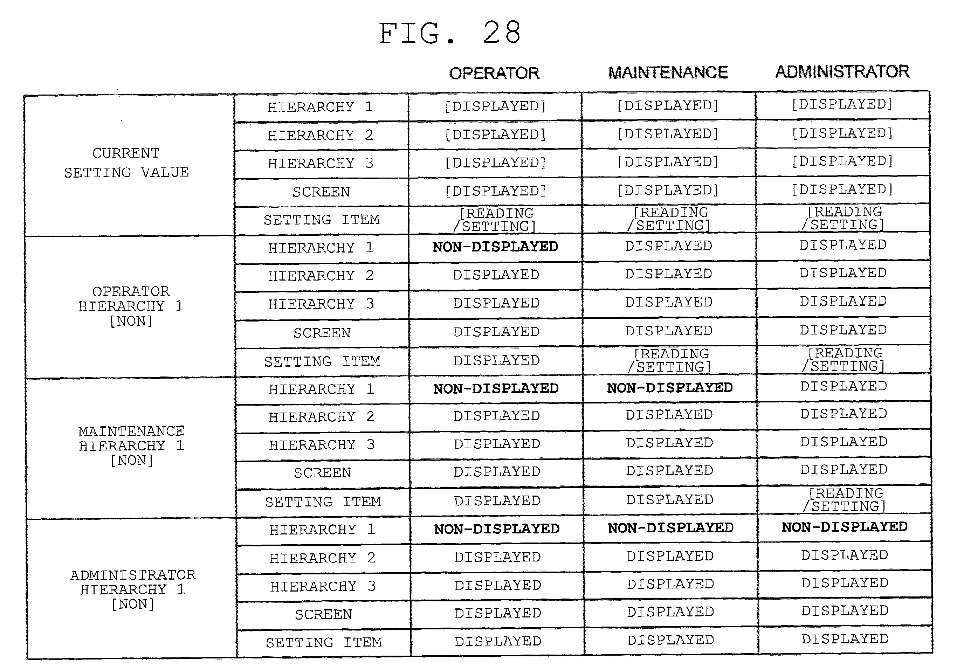

FIG. 28 is a view illustrating an example of the control of the setting change section 16. In FIG. 28, the "non-displayed", the "reading only", and the "setting changeable" are respectively referred to as the "non-displayed", the "reading", and the "setting". In a case where the access authority for a prescribed screen item is changed, the setting change section 16 does not change the setting of the access authority for a setting item and a screen item in a hierarchy lower than the prescribed screen item. That is, as indicated by boldface in FIG. 28, in a case where the screen item, the "hierarchy 1", for example, is changed from the "displayed" to the "non-displayed" by the accessing person, the setting change section 16 maintains (does not change) the access authorities for the setting items and the screen items (the "hierarchy 2", the "hierarchy 3", and the "screen"), which are lower than the "hierarchy 1", as the current setting value of the "displayed" or the "reading only" or the "setting changeable".

Referring back to FIG. 2, the communication section 18 is adapted to connect the machines 3 to be capable of communicating with each other. The communication section 18 receives the setting information output from the setting control device 5 of another machine 3, and outputs the setting information to the setting control device 5 of the other machine 3. The machines 3 are connected to be capable of communicating with each other via a Local Area Network (LAN), for example. When an output destination (the other machine 3) to which the setting information is output is set on the touch panel 10, the communication section 18 reads out the setting information from the storage section 14 and outputs the setting information to the output destination. When receiving the setting information from the other machine 3, the communication section 18 causes the storage section 14 to store the setting information. The LAN may be wired or wireless.

Since the machines 3 are connected to be capable of communicating with each other by the communication section 18, a setting of another machine 3 can be changed by performing a setting in one setting control device 5 of the plurality of machines 3. The system of textile machines 1 may include only one machine 3, and in this case, the communication section 18 is not required to be provided.

The input/output section 20 is adapted to input/output the setting information. The input/output section 20 outputs the setting information to an external storage medium 22 via a port (for example, a USB terminal), and inputs the setting information from the external storage medium 22. The external storage medium 22 is a USB memory, an external hard disk, or the like, for example. When an operation (for example, pressing a hard copy button of the sub menu M5) to output the setting information is performed on the touch panel 10 by the accessing person, the input/output section 20 reads out the setting information from the storage section 14 and outputs the setting information to the external storage medium 22 connected to the port. When the external storage medium 22 is connected to the port, the input/output section 20 reads out the setting information from the external storage medium 22 and causes the storage section 14 to store the setting information. Information input/output by the input/output section 20 is not limited to the setting information, and may be another kind of information.

As described above, in the setting control device 5 according to the present embodiment, the display control section 12 displays on the touch panel 10, the first setting region A1 in which the access authority for the display screen is set for every display screen and for every access level of the accessing person who accesses the display screen. Accordingly, in the setting control device 5, the access authority for the display screen can be set in the first setting region A1. Thus, in the setting control device 5, in a case where the accessing person changes the access authority for a setting item at an arbitrary access level by the access property function, the access authority can be set for the access level such that a display screen on which the setting item is displayed can be accessed. Consequently, in the setting control device 5, inconsistency in which even if the access authority for the setting item is changed, the display screen on which the setting item is displayed cannot be browsed can be prevented from occurring.

In the present embodiment, the display control section 12 displays on the touch panel 10, the second setting region A2 in which the access authority for the screen item, which can be set in the system of textile machines 1, is set for every setting item and for every access level. Accordingly, in the setting control device 5, the access authority can be changed for every setting item in the second setting region A2.

In the present embodiment, there is provided the storage section 14 adapted to store for every access level, the access authority for every display screen and the access authority for every setting item. In addition, there is provided the setting change section 16 adapted, in a case where a setting of a certain access authority set in the first setting region A1 and/or the second setting region A2 and stored in the storage section 14 is changed, to change a setting of another access authority stored in the storage section 14 in conjunction with the relevant change. Accordingly, since in a case where a setting of a certain access authority is changed, the setting control device 5 changes a setting of another access authority stored in the storage section 14 in conjunction with the change, consistency of the access authority can be achieved.

In the present embodiment, the setting change section 16 changes a setting by linking the access authority for every display screen stored in the storage section 14 and the access authority for every setting item stored in the storage section 14 with each other. Accordingly, the setting control device 5 can achieve consistency of the access authority between the display screen and the setting item displayed on the display screen.

In the present embodiment, the setting change section 16 changes the setting of the access authority for every display screen stored in the storage section 14 in conjunction among each access level. Accordingly, the setting control device 5 can achieve consistency of the access authority for the display screen among the access levels.

In the present embodiment, the setting change section 16 has the plurality of conjunction patterns of the access authority in accordance with the access level and the setting content each of the access authority set in the first setting region A1 and/or the second setting region A2. Accordingly, the setting control device 5 can perform not only a stereotypical setting of the access authority, but also a setting of the access authority in various conjunction manners.

In the present embodiment, the two settings of the "displayed" and the "non-displayed" of a prescribed display screen are possible with the setting button B1 as the access authority for every display screen in the first setting region A1. In addition, the settings of the "setting changeable", the "reading only", and the "non-displayed" are possible with the setting button B2 as the access authority for every setting item in the second setting region A2. Accordingly, in the setting control device 5, since the access authority is set in advance, the setting of the access authority for every display screen can be easily performed.

In the present embodiment, in a case where the access authority for a prescribed screen item of a display screen that is stored in the storage section 14 is changed, the setting change section 16 does not change a setting of the access authority for a screen item in a hierarchy lower than the prescribed screen item. For example, in a case where the access authority for a display screen in a higher hierarchy is set to the "non-displayed", a display screen in a hierarchy lower than the display screen is necessarily not displayed. Accordingly, in the setting control device 5, inconsistency in which a screen to be set to the "non-displayed" is displayed can be prevented even if the lower hierarchy is not changed in conjunction with the higher hierarchy. Furthermore, since the setting in the lower hierarchy is not changed, later processing to restore the setting of the access authority for the display screen in the lower hierarchy can be omitted.

In the present embodiment, in a case where the access authority for a prescribed display screen that is stored in the storage section 14 is changed, the setting change section 16 does not change a setting of the access authority for a setting item displayed on the prescribed display screen. The setting item is displayed on the display screen. Therefore, since the display screen itself is not displayed in a case where the access authority for the display screen is set to the "non-displayed", for example, the setting item is not displayed, either. Accordingly, even if the setting of the access authority for the setting item displayed on the display screen is not changed, the setting control device 5 can prevent inconsistency in which a setting item not to be displayed is displayed. Furthermore, since the setting of the access authority for the setting item is not changed, later processing to restore the setting of the access authority for the setting item can be omitted.

In the present embodiment, the display control section 12 displays the first setting region A1 and the second setting region A2 next to each other in the content C of the access authority setting screen D. Accordingly, the accessing person can perform the setting of the access authority for the display screen and/or the setting item on the access authority setting screen D, and can easily check the setting contents.

In the present embodiment, the setting control devices 5 each provided to each of the machines 3 can communicate with each other by the communication section 18. Accordingly, the textile machine 1 can perform a setting for another setting control device 5 by performing a setting for one setting control device 5, and thus efficiency can be achieved.

In the present embodiment, there is provided the input/output section 20 adapted to output to the external storage medium 22, the setting information including the access authority stored in the storage section 14, or to input the setting information from the external storage medium 22. Accordingly, the setting control device 5 can share the setting information with another setting control device 5 via the external storage medium 22. Therefore, even in a case of not employing communication by the communication section 18, a setting of another setting control device 5 can be performed by performing a setting of one setting control device 5, and thus efficiency can be achieved.

### [The others]

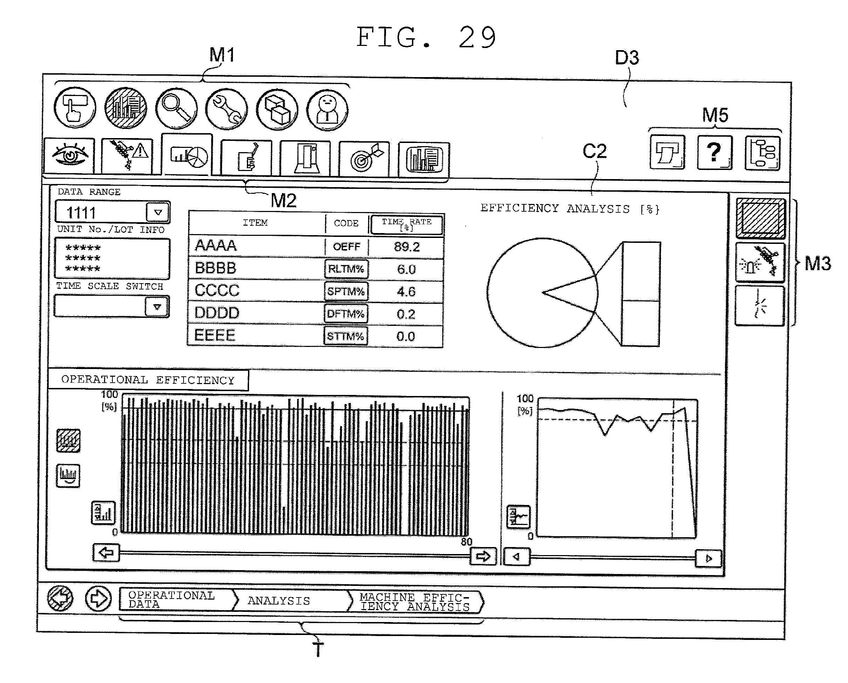

The present invention is not limited to the above-described embodiment, and may be modified in various manners without departing from the essence of the present invention. For example, in the above-described embodiment, the setting screen illustrated in FIG. 8 is described as an example of the display screen, but the display screen may be a monitor screen. FIG. 29 is a view illustrating an example of the monitor screen displayed on the touch panel 10. When the accessing person presses an "operation monitor" (a second icon from a left side) in the main menu M1, the display control section 12 displays the monitor screen for monitoring various types of states of the machine 3 on the touch panel 12. When the "operation monitor" is pressed in the main menu M1, the display control section 12 reads out operational data of the machine 3 from the storage section 14. As illustrated in FIG. 29, the display control section 12 displays a monitor screen D3 on the touch panel 10 based on the the operational data that has been read out. In a content C2 of the monitor screen D3, the operational data of the machine 3 and analysis result thereof are displayed. The monitor screen D3 is also useful since the access authority for every display screen can be set for every access level and thus flexibility of the setting of displayed/non-displayed increases.

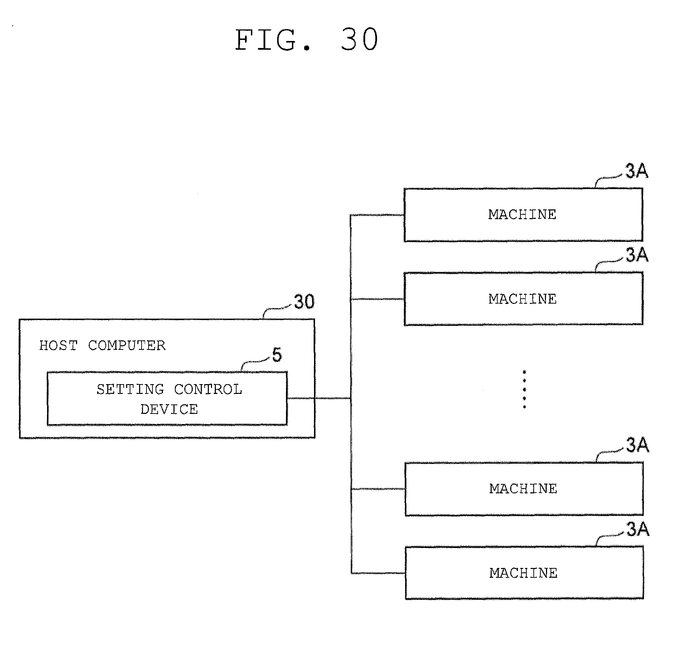

In the above-described embodiment, a configuration in which the setting control device 5 is provided to each machine 3 is described as an example, but as illustrated in FIG. 30, a textile machine may have a configuration in which the setting control device 5 is provided to a host computer (an overall control device) 30. The host computer 30 is a device adapted to collectively control each machine 3A. The host computer 30 and each machine 3A are connected to communicate with each other. When various settings are performed in the setting control device 5, the setting information are output to each machine 3A, and each machine 3A is set.

In the above-described embodiment, a case where the textile machine 3 is a spinning machine is described as an example, but a textile machine may be a yarn winding machine. The setting control device 5 may also be applied to the yarn winding machine as applied to the spinning machine. In a case where the textile machine is the yarn winding machine, a unit (a winding unit) is provided with a yarn supplying device, a device for applying tension to a yarn, a yarn joining device, and a winding device, for example.

In the above-described embodiment, a configuration in which the setting of the access authority is individually performed for one display screen in the first setting region A1 is described as an example, but a plurality of the display screens may be grouped in advance, and the setting of the access authority may be performed by the group.

In the above-described embodiment, a configuration in which in a case where the access authority for a prescribed screen item of a display screen stored in the storage section 14 is changed, the setting change section 16 does not change the setting of the access authority for a screen item in a hierarchy lower than the relevant screen item is described as an example, but the setting of the access authority may be changed.

In the above-described embodiment, a configuration in which in a case where the access authority for a prescribed display screen stored in the storage section 14 is changed, the setting change section 16 does not change the setting of the access authority for a setting item displayed on the prescribed display screen is described as an example, but the setting of the access authority may be changed.

In the above-described embodiment, the touch panel 10 is described as an example of the display section, but the display section may be merely a display. In this case, a setting in the first setting region A1 and the second setting region A2 merely needs to be performed by an operation input section such as a mouse, key board, or the like.

In the above-described embodiment, the "OPERATOR", the "MAINTENANCE", the "ADMINISTRATOR", and the "MANUFACTURER" are described as an example of the access level of the accessing person, but the number and types of access levels are not limited thereto, and an access level further lower/higher may be set. Furthermore, an access level of another kind may be set.

In the above-described embodiment, the "displayed" and the "non-displayed" are described as an example of the access authority set in the first setting region A1, but the number and types of the access authorities are not limited thereto, and another item may be set.

In the above-described embodiment, the "non-displayed", the "reading only", and the "setting changeable" are described as an example of the access authority set in the second setting region A2, but the number and types of the access authorities are not limited thereto, and another item may be set.

In the above-described embodiment, in the first setting region A1 and the second setting region A2, a color of display is changed in a case where an initial setting is changed, but the color may not be changed. Furthermore, a method for announcing a change may be another.

The present invention further discloses a method for operating a setting control device 5, which displays a second setting region A2 on the display section 10, the second setting region A2 being a region in which an access authority for a setting item is set for every said setting item and for every said access level, the setting item being settable in the textile machine.

This method may further comprise storing for every said access level, each of the access authority for every said display screen and the access authority for every said setting item, and, in a case where a setting of a certain said access authority is changed in the first setting region A1 and/or the second setting region A2, changing a setting of another said access authority stored in the storage section 14 in conjunction with said change, the certain said access authority being stored in the storage section 14.

The method may also comprise changing a setting by linking the access authority for every said display screen stored in the storage section 14 and the access authority for every said setting item stored in the storage section 14 with each other.

The method can further comprise the step of changing a setting of the access authority for every said display screen stored in the storage section 14 in conjunction among each said access level.

The method may further use a plurality of conjunction patterns of the access authority according to said access level and a setting content of the access authority set in the first setting region A1 and/or the second setting region A2.

The method may also comprise that said display screen is hierarchized and includes hierarchized screen items, and
in a case where the access authority for a prescribed screen item of a display screen stored in the storage section 14 is changed, a setting of the access authority for a screen item in a hierarchy lower than the prescribed screen item is not changed.

The method may further comprise that in a case where the access authority for a prescribed display screen stored in the storage section 14 is changed, a setting of the access authority for said setting item displayed on the prescribed display screen is not changed.

The method may futher comprise that at least two settings of a "displayed" and a "non-displayed" are provided in the first setting region A1 as the access authority for every said display screen.

The method can further comprise that at least three settings of a "setting changeable", a "reading only", and a "non-displayed" are provided in the second setting region A2 as the access authority for every said setting item.

The invention further discloses that the display screen is hierarchized and includes hierarchized screen items, and, in a case where the access authority for a prescribed screen item of a display screen stored in the storage section 14 is changed from the "non-displayed" to the "displayed", the access authority for a screen item in a hierarchy higher than the prescribed screen item and the access authority for an access level higher than an access level of the prescribed screen item is changed to the "displayed".

The invention also discloses that the display screen is hierarchized and includes hierarchized screen items, and
in a case where the access authority for a prescribed screen item of a display screen stored in the storage section 14 is changed from the "displayed" to the "non-displayed", the access authority for a screen item in a hierarchy higher than the prescribed screen item and the access authority for an access level lower than an access level of the prescribed screen item is changed to the "non-displayed".

The method may further comprise the step of setting information including the access authority stored in the storage section 14 to an external storage medium 22 or inputting the setting information from the external storage medium 22.

The method may also include the step of displaying an access authority setting screen D on the display section 10 as one of the plurality of display screens and displaying the first setting region A1 and the second setting region A2 next to each other in the access authority setting screen D.

The method can further comprise the step of displaying at least a setting screen and a monitor screen on the display section 10 as the display screen, the setting screen being a screen in which various settings of the textile machine 3 are performed, and the monitor screen being a screen in which a state of the textile machine 3 is monitored.

## Claims

1. A setting control device (5) of a textile machine (3) including a display section (10) capable of displaying a plurality of display screens on a surface thereof, comprising:
a display control section (12) adapted to control display of the display screens on the display section (10), **characterized in that**
the display control section (12) is adapted to display a first setting region (A1) on the display section (10), the first setting region (A1) being a region in which an access authority for the display screen is set for every said display screen and for every access level of an accessing person accessing the display screen.

2. The setting control device (5) according to claim 1, **characterized in that** the display control section (12) is adapted to display a second setting region (A2) on the display section (10), the second setting region (A2) being a region in which an access authority for a setting item is set for every said setting item and for every said access level, the setting item being settable in the textile machine (3).

3. The setting control device (5) according to claim 2, **characterized by**
a storage section (14) adapted to store for every said access level, each of the access authority for every said display screen and the access authority for every said setting item, and
a setting change section (16) adapted, in a case where a setting of a certain said access authority is changed in the first setting region (A1) and/or the second setting region (A2), to change a setting of another said access authority stored in the storage section (14) in conjunction with said change, the certain said access authority being stored in the storage section (14).

4. The setting control device (5) according to claim 3, **characterized in that** the setting change section (16) is adapted to change a setting by linking the access authority for every said display screen stored in the storage section (14) and the access authority for every said setting item stored in the storage section (14) with each other.

5. The setting control device (5) according to claim 3 or claim 4, **characterized in that** the setting change section (16) is adapted to change a setting of the access authority for every said display screen stored in the storage section (14) in conjunction among each said access level.

6. The setting control device (5) according to any one of claim 3 through claim 5, **characterized in that** the setting change section (16) has a plurality of conjunction patterns of the access authority according to said access level and a setting content of the access authority set in the first setting region (A1) and/or the second setting region (A2).

7. The setting control device (5) according to any one of claim 3 through claim 6, **characterized in that** said display screen is hierarchized and includes hierarchized screen items, and
the setting change section (16) is adapted, in a case where the access authority for a prescribed screen item of a display screen stored in the storage section (14) is changed, not to change a setting of the access authority for a screen item in a hierarchy lower than the prescribed screen item.

8. The setting control device (5) according to any one of claim 3 through claim 7, **characterized in that** the setting change section (16) is adapted, in a case where the access authority for a prescribed display screen stored in the storage section (14) is changed, not to change a setting of the access authority for said setting item displayed on the prescribed display screen.

9. The setting control device (5) according to any one of claim 3 through claim 8, **characterized in that** at least two settings of a "displayed" and a "non-displayed" are possible in the first setting region (A1) as the access authority for every said display screen.

10. The setting control device (5) according to claim 9, **characterized in that** at least three settings of a "setting changeable", a "reading only", and a "non-displayed" are possible in the second setting region (A2) as the access authority for every said setting item.

11. The setting control device (5) according to claim 9 or claim 10, **characterized in that** the display screen is hierarchized and includes hierarchized screen items, and
the setting change section (16) is adapted, in a case where the access authority for a prescribed screen item of a display screen stored in the storage section (14) is changed from the "non-displayed" to the "displayed", to change the access authority for a screen item in a hierarchy higher than the prescribed screen item and the access authority for an access level higher than an access level of the prescribed screen item to the "displayed".

12. The setting control device (5) according to any one of claim 3 through claim 11, **characterized by**: an input/output section (20) adapted to output setting information including the access authority stored in the storage section (14) to an external storage medium (22) or to input the setting information from the external storage medium (22).

13. The setting control device (5) according to any one of claim 2 through claim 12, **characterized in that** the display control section (12) is adapted to display an access authority setting screen (D) on the display section (10) as one of the plurality of display screens and to display the first setting region (A1) and the second setting region (A2) next to each other in the access authority setting screen (D).

14. The setting control device (5) according to any one of claim 1 through claim 13, **characterized in that** the display control section (12) is adapted to display at least a setting screen and a monitor screen on the display section (10) as the display screen, the setting screen being a screen in which various settings of the textile machine (3) are performed, and the monitor screen being a screen in which a state of the textile machine (3) is monitored.

15. A method of operating a setting control device (5) of a textile machine (3) including a display section (10) capable of displaying a plurality of display screens on a surface thereof, with the following steps
controlling the display of the display screens on the display section (10), **characterized by**
displaying a first setting region (A1) on the display section (10), the first setting region (A1) being a region in which an access authority for the display screen is set for every said display screen and for every access level of an accessing person accessing the display screen.
